# FASCICULE DE BREVET EUROPEEN

(11) **EP 3 918 377 B1**
(45) Date de publication et mention de la délivrance du brevet: **03.01.2024**
(21) Numéro de dépôt: 20701495.2
(22) Date de dépôt: 29.01.2020
(51) Int. Cl.: G01V 3/10, G01V 8/00, G01V 11/00, G01S 13/86, G01S 13/88

(54) **SYSTEMES DETECTEURS DE METAL PERFECTIONNES POUR LOCALISER LA PRESENCE D'OBJETS METALLIQUES**
VERBESSERTE METALLDETEKTOREINRICHTUNGEN ZUR ORTUNG DER PRÄSENZ VON METALLISCHEN OBJEKTEN
IMPROVED METAL-DETECTOR MEANS FOR LOCATING THE PRESENCE OF METALLIC OBJECTS

(30) Priorité: 29.01.2019 FR 1900766
(43) Date de publication de la demande: 08.12.2021
(73) Titulaire: Manneschi, Alessandro, 52100 Arezzo (IT)
(72) Inventeur: Manneschi, Alessandro, 52100 Arezzo (IT)
(74) Mandataire: Regimbeau
(86) Numéro de dépôt international: PCT/EP2020/052188
(87) Numéro de publication internationale: WO 2020/157147

(56) Documents cités:
- EP-A1- 1 750 148
- EP-A1- 2 202 700
- WO-A2-2018/225028
- US-A- 4 012 690

## Description

### DOMAINE DE L'INVENTION

La présente invention concerne le domaine des détecteurs conçus pour la détection d'objets ou matières non autorisés dans une zone à accès protégé.

La présente invention concerne plus précisément le domaine des détecteurs de métal de type inductif.

La présente invention s'applique en particulier, mais non exclusivement, à l'intégration d'un détecteur de métal dans un scanner corporel conçu pour inspecter des individus, par exemple les passagers avant l'embarquement dans des aéroports, ou encore des individus accédant à un site public, par exemple une enceinte de sport tel qu'un stade ou une salle de spectacle, afin de détecter les objets interdits dissimulés sous les vêtements. De tels appareils permettent notamment d'éviter la palpation systématique.

### ARRIERE-PLAN TECHNOLOGIQUE

Il apparaît aujourd'hui nécessaire de contrôler avec une grande fiabilité les tentatives d'introduction ou de sortie de produits interdits, notamment d'armes, dans ou hors d'une zone sensible.

Le problème ainsi posé couvre un très large éventail de situations, qui englobe notamment et non limitativement la tentative d'introduction de produits interdits dans une zone protégée, tel qu'un aéroport, un magasin, une école, une gare, un organisme public voir privé, ou la tentative de sortie de produits hors d'un périmètre défini, par exemple en cas de vol dans une entreprise ou sur un site protégé.

Différents types de détecteurs d'objet métallique existent. Généralement les détecteurs de métaux sont des détecteurs de type inductif. Ils comprennent au moins un bobinage émetteur et au moins un bobinage récepteur. Le bobinage émetteur est alimenté par un courant électrique alternatif. Le bobinage récepteur est conçu pour détecter les perturbations de ce champ magnétique dues à la présence d'un objet métallique, par exemple l'atténuation de l'amplitude du champ magnétique, voire le changement de phase du signal, dus par exemple aux courants de Foucault générés sur l'objet métallique.

Différents types de scanner corporel existent également. Les scanners corporels les plus anciens sont des scanners corporels à rayons X. Des scanners corporels plus récents utilisent la technologie des ondes dites millimétriques.

On trouvera un exemple de scanner corporel dans le document EP 2 202 700. Ce document propose notamment de disposer un détecteur de métal additionnel à l'entrée d'un scanner corporel.

Depuis plusieurs années, des scanners corporels (généralement désignés par leur terminologie anglosaxonne « body scanner ») ont été développés afin de détecter des armes, des explosifs, etc. cachés sous les vêtements d'individus pénétrant dans une zone protégée. Tous ces systèmes utilisent des technologies basées sur la détection d'énergies de rayonnement modulées, réfléchies ou émises par le corps des individus inspectés. Les énergies de rayonnement ainsi utilisées comprennent les rayons X, les microondes, les ondes millimétriques, la lumière infrarouge, les ondes térahertz et les ultrasons.

Malgré l'utilisation de plusieurs types d'énergies de rayonnement et de géométries d'imagerie, ces scanners corporels ont tous pour principe la création d'une image électronique de l'individu sur laquelle les vêtements de l'individu sont transparents. Cette image est ensuite affichée sur un écran et visualisée par un opérateur afin que celui-ci détermine si l'individu porte un objet cible. Pour cela, l'opérateur, qui est formé à la détection d'objets cibles, doit être capable de déterminer si les objets identifiés par le scanner corporel correspondent à l'anatomie humaine, à un objet autorisé tel qu'un briquet, un mouchoir ou encore des pièces, ou à un objet cible tel qu'une arme ou un explosif.

Il s'avère de nos jours que les individus qui tentent d'introduire frauduleusement un objet interdit, notamment une arme, dans une zone protégée font preuve de beaucoup d'imagination pour dissimuler lesdits objets, par exemple séparent l'objet en différentes pièces qu'ils répartissent sur le corps.

L'examen à l'aide de scanners corporels devient en conséquence de plus en plus complexe et long à réaliser.

Par ailleurs si les détecteurs de métal existant donnent globalement satisfaction quant à la détection de l'existence ou non d'un objet métallique, ils laissent souvent à désirer quant à la localisation d'un tel objet métallique sur un individu.

Le document EP 1 750 148 décrit un détecteur de métal comprenant trois ou quatre bobinages disposés de part et d'autre d'un passage afin de déterminer la position d'un objet cible porté latéralement et/ou centralement par un individu.

Le document US 4 012 690 décrit un système de détection comprenant des boucles inductives parallèles les unes aux autres et faisant le tour de la porte.

Le document EP 2 202 700 décrit un système de détection combinant deux technologies de détection.

Le document WO 2018/225028 décrit un système comprenant un scanner corporel et un dispositif de détection pour chaussures.

### RESUME DE L'INVENTION

Un objectif de l'invention est de proposer de nouveaux moyens de détection permettant d'améliorer la détection d'objets cibles susceptibles d'être camouflés sur le corps d'un individu.

Un autre objectif de l'invention est de permettre de localiser un objet métallique détecté sur un individu.

Un objectif de l'invention est en particulier de proposer des moyens de détection qui soient efficaces quel que soit le lieu de fixation d'un objet frauduleux sur le corps d'un individu.

Un objectif secondaire de l'invention est de proposer des moyens qui permettent un examen à l'aide de scanners corporels plus précis et plus rapide qu'avec les scanners corporels connus de l'état de la technique.

Ces objectifs sont atteints selon l'invention grâce à un système détecteur d'objets métalliques portés par un individu et un procédé de détection d'objets métalliques associé conformes aux revendications indépendantes annexées. Des modes de réalisation font l'objet des revendications dépendantes.

On notera que, en comparaison notamment avec le document EP 1 750 148 au nom du Demandeur, le système de l'invention permet d'améliorer encore la détermination de la position d'un objet métallique identifié par les au moins trois transducteurs. En effet, en l'absence de barrières de détection de passage et sur la base uniquement des signaux issus d'moins trois transducteurs, il n'est pas possible de discriminer la position de l'objet métallique dans le sens de la profondeur (avant/arrière).

En particulier, le système de détection comprend un détecteur de métal comprenant au moins trois transducteurs inductifs disposés de part et d'autre d'un passage, deux de ces transducteurs étant placés sur un même côté du passage en étant espacés longitudinalement selon la direction de déplacement dans le passage, tandis que le troisième transducteur est disposé sur le côté opposé du passage de sorte que les trois transducteurs permettent en combinaison une discrimination spatiale de la localisation des objets métalliques détectés.

Selon une autre caractéristique avantageuse de l'invention, le système comprend en combinaison un scanner corporel et ledit détecteur de métal intégré au scanner corporel, lequel détecteur de métal est adapté pour piloter le scanner corporel en adaptant la sensibilité du scanner corporel, au moins sur une zone d'intérêt, selon que des objets métalliques sont détectés ou non par le détecteur de métal.

Selon une autre caractéristique avantageuse de l'invention, le détecteur de métal comprend trois transducteurs inductifs formant un émetteur et deux récepteurs, par exemple disposés sous forme d'un émetteur situé sur un premier côté du passage et deux récepteurs associés disposés sur le côté opposé du passage.

Selon une autre caractéristique avantageuse de l'invention, le détecteur de métal comprend trois transducteurs inductifs formant deux émetteurs et un récepteur, par exemple disposés sous forme de deux émetteurs situés sur un premier côté du passage et un récepteur associé disposé sur le côté opposé du passage.

Selon une autre caractéristique avantageuse de l'invention, le détecteur de métal comprend quatre transducteurs inductifs formant deux émetteurs et deux récepteurs, par exemple disposés sous forme de deux transducteurs situés sur un premier côté du passage et deux transducteurs disposés sur le côté opposé du passage.

Selon une autre caractéristique avantageuse de l'invention, le détecteur de métal comprend au moins trois transducteurs inductifs adaptés pour discriminer la position d'un objet détecté en métal, d'une part dans le sens de la largeur du passage, transversalement à la direction de déplacement, typiquement sur la gauche ou sur la droite d'un individu, et d'autre part dans le sens de la profondeur, soit longitudinalement parallèlement à la direction de déplacement, typiquement sur l'avant ou sur l'arrière d'un individu.

Selon une autre caractéristique avantageuse de la présente invention, chacun des transducteurs inductifs est adapté pour fonctionner alternativement en émetteur et/ou récepteur.

Selon une autre caractéristique avantageuse de la présente invention, chaque transducteur est formé d'au moins un bobinage.

Selon une autre caractéristique avantageuse de la présente invention, les barrières de détection de passage comprennent des barrières optiques.

Selon une autre caractéristique avantageuse de la présente invention, le détecteur de métal comprend des transducteurs inductifs qui génèrent des lignes principales de détection entre deux transducteurs respectivement émetteur et récepteur, qui sont pour les unes transversales à la direction de déplacement dans le détecteur de métal et pour les autres inclinées en oblique ou diagonale par rapport à cette direction de déplacement dans le détecteur de métal, les lignes de détection transversales étant utilisées prioritairement pour détecter des objets métalliques portés par un individu sur l'avant et sur l'arrière de son corps dans la mesure où l'avant et l'arrière du corps de l'individu atteint en premier et respectivement quitte en dernier ces lignes, tandis que les lignes de détection obliques sont utilisées prioritairement pour détecter des objets métalliques portés par un individu sur son côté gauche ou son côté droit dans la mesure où les côtés de l'individu franchissent successivement ces lignes.

L'invention concerne également un procédé de détection d'objets métalliques portés par un individu selon la revendication 13.

Selon une autre caractéristique avantageuse le procédé de l'invention comprend l'étape qui consiste à piloter un scanner corporel en adaptant sa sensibilité, selon que des objets métalliques sont détectés ou non par le détecteur de métal associé, au moins sur une zone d'intérêt correspondant à la localisation d'un objet métallique par le détecteur de métal.

### BREVE DESCRIPTION DES DESSINS

D'autres caractéristiques, buts et avantages de la présente invention apparaîtront à la lecture de la description détaillée qui va suivre, et au regard des dessins annexés donnés à titre d'exemples non limitatifs et sur lesquels :
Les figures 1a, 1b et 1c représentent schématiquement des vues en coupe horizontale d'un détecteur de métal conforme respectivement à trois variantes de réalisation de l'invention,
La figure 1d représente schématiquement une vue en perspective d'un détecteur de métal conforme à un mode de réalisation préférentiel de l'invention,
Les figures 2a à 2i représentent une suite de séquences de détection opérées à l'aide du détecteur de métal conforme à la présente invention comprenant trois transducteurs, lors de la progression d'un individu dans le canal du détecteur de métal, plus précisément neuf étapes successives de ce processus de détection,
Les figures 3a et 3b représentent les signaux obtenus sur les transducteurs récepteurs illustrés sur la figure 2 au cours de la progression d'un individu portant des objets métalliques sur son avant, son arrière et sur ses côtés gauche et droit, dans le passage du détecteur de métal,
Les figures 3c et 3d représentent schématiquement les signaux obtenus sur les transducteurs récepteurs illustrés sur la figure 2 au cours de la progression d'un individu dans le passage du détecteur de métal dans l'hypothèse théorique d'un objet métallique entourant totalement un individu examiné,
Les figures 4a, 4b et 4c représentent les signaux obtenus sur les sorties de barrières de détection de passage illustrées sur la figure 2 au cours de la progression d'un individu dans le passage du détecteur de métal,
La figure 5 représente une suite de séquences de détection opérées à l'aide d'une variante du détecteur de métal conforme à la présente invention comprenant quatre transducteurs, deux transducteurs émetteurs et deux transducteurs récepteurs, lors de la progression d'un individu portant des objets métalliques sur son avant, son arrière et sur ses côtés gauche et droit, dans le canal du détecteur de métal, plus précisément les figures 5a à 5h représentent huit étapes successives de ce processus de détection,
Les figures 6a, 6b, 6c et 6d représentent les signaux obtenus sur les transducteurs récepteurs illustrés sur la figure 5 au cours de la progression d'un individu dans le passage du détecteur de métal suite à l'activation successive des transducteurs émetteurs,
Les figures 6e, 6f, 6g et 6h représentent schématiquement les signaux obtenus sur les transducteurs récepteurs illustrés sur la figure 5 au cours de la progression d'un individu dans le passage du détecteur de métal dans l'hypothèse théorique d'un objet métallique entourant totalement un individu examiné,
Les figures 7a, 7b et 7c représentent les signaux obtenus sur les sorties de barrières de détection de passage illustrées sur la figure 5 au cours de la progression d'un individu dans le passage du détecteur de métal,
La figure 8 représente schématiquement un organigramme d'un exemple de procédé de détection conforme à la présente invention,
La figure 9 représente schématiquement une vue en perspective d'un dispositif conforme à la présente invention intégrant un détecteur de métal dans un scanner corporel,
Les figures 10a à 10e représentent schématiquement des vues en coupe horizontale de cinq variantes de réalisation conformes à l'invention d'un tel scanner corporel intégrant un détecteur de métal, et
La figure 11 représente schématiquement un organigramme d'un exemple de procédé de détection à l'aide d'un dispositif conforme à la présente invention comprenant un scanner corporel qui intègre un détecteur de métal.

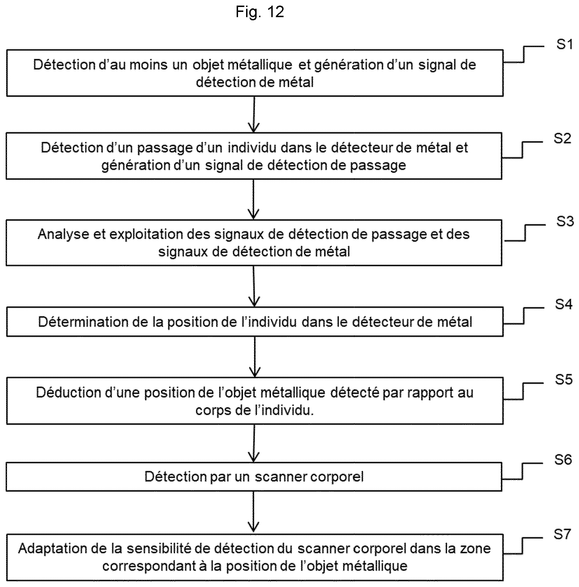

La figure 12 est un organigramme illustrant des étapes d'un procédé de détection d'objets frauduleux portés par un individu conforme à un mode de réalisation de l'invention.

### DESCRIPTION DETAILLEE D'UN MODE DE REALISATION

Afin d'améliorer la détection d'objets cibles susceptibles d'être camouflés sur le corps d'un individu, l'invention propose un système détecteur d'objets interdits portés par des individus conforme à l'invention comprend un détecteur de métal 100 comprenant des transducteurs 141, 142, 143, trois barrières de détection de passage 130 dans le détecteur de métal 100 et une unité centrale 50 qui analyse les signaux issus des barrières de détection de passage 130 et des transducteurs 140 pour en déduire sur quelle partie du corps d'un individu ledit objet métallique M1, M2, M3 est placé.

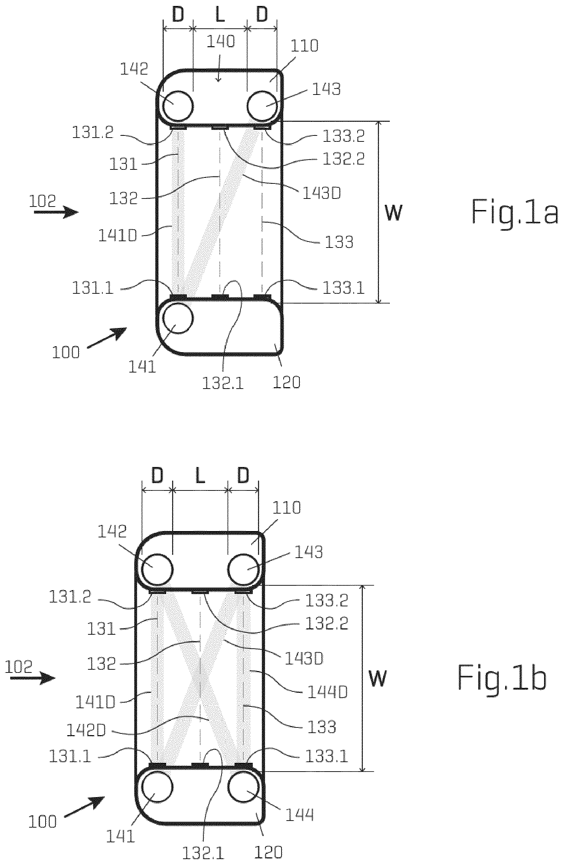

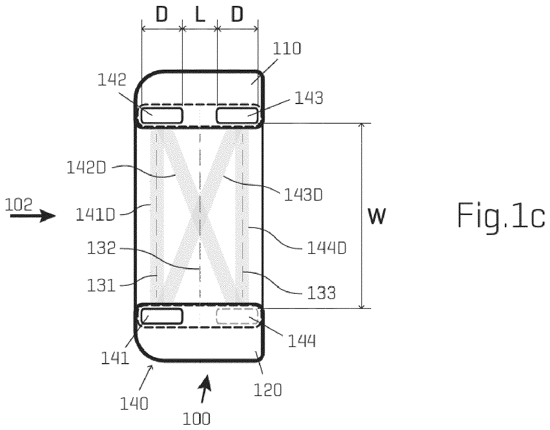

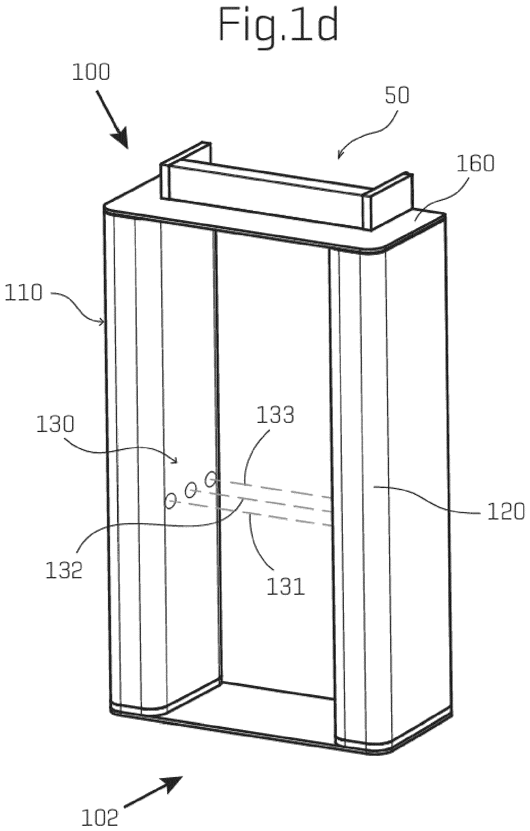

On va dans un premier temps décrire la structure des détecteurs de métal 100 illustrés sur les figures 1a, 1b, 1c et 1d.

Le détecteur de métal de type inductif 100 est de préférence formé d'un portique ou équivalent comprenant deux montants ou panneaux verticaux 110, 120, surmontés d'un barreau horizontal 160 comme illustré sur la figure 1d.

L'unité centrale 50 peut être logée en un lieu quelconque du système, par exemple dans le boitier du détecteur 100, typiquement au niveau du barreau 160. L'unité centrale 50 peut notamment comprendre un calculateur de type processeur, microprocesseur, microcontrôleur, etc., configuré pour exécuter des instructions.

Le détecteur de métal 100 définit un canal ou couloir de passage 102 que doit emprunter tout individu pour franchir le portique. Ce canal ou couloir de passage 102 est encadré par les deux panneaux latéraux 110, 120.

Les panneaux latéraux 110, 120 logent des moyens 140 formant détecteur de métal. Ces moyens 140 sont formés de préférence de bobinages placés respectivement dans les panneaux 110, 120.

La technologie de détecteur de métaux à base de bobinage est bien connue de l'homme de l'art. Elle ne sera donc pas décrite non plus dans le détail par la suite.

L'on rappelle cependant que généralement les détecteurs de métaux de type inductif comprennent au moins un bobinage émetteur placé d'un côté du passage 102 et au moins un bobinage récepteur placé sur le côté opposé du passage 102. Le bobinage émetteur est alimenté par un courant électrique alternatif de fréquence contrôlée, de préférence une gamme de fréquences déterminées et contrôlées, pour émettre un champ magnétique, typiquement entre 100 Hz et 50 kHz. Le bobinage récepteur est conçu pour détecter les perturbations de ce champ magnétique dues à la présence d'un objet métallique dans le passage 102 et au déplacement de cet objet métallique dans le passage 102, par exemple l'atténuation de l'amplitude du champ magnétique, voire le changement de phase du signal, dus par exemple aux courants de Foucault générés sur l'objet métallique.

En pratique chacun des bobinages émetteur et récepteur est formé de préférence d'une pluralité de bobinages ou spires élémentaires, couvrant une partie respective de la hauteur du portique, pour permettre de discriminer la position des cibles en métal détectées et ainsi localiser en hauteur la position de ces cibles.

Par ailleurs de préférence chacun des bobinages est alternativement émetteur et récepteur.

On a représenté sur la figure 1a une première variante de réalisation selon laquelle les moyens 140 sont formés de trois transducteurs bobinage 141, 142, 143 répartis entre les panneaux latéraux 110, 120 sous forme d'au moins un bobinage 141 dans un panneau latéral 120 et deux bobinages 142, 143 dans le panneau latéral opposé 110.

Les deux bobinages 142 et 143 situés dans un panneau latéral commun 110 ou 120 sont par ailleurs espacés longitudinalement.

Comme on l'expliquera par la suite cette configuration permet une détection de métal avec localisation du métal en trois dimensions. Cette localisation en trois dimensions est rendue possible par le fait que l'individu franchit successivement plusieurs lignes privilégiées de détection qui correspondent à des lignes fictives reliant respectivement les centres des bobinages émetteurs et récepteurs. Ainsi si l'on considère arbitrairement que le bobinage 141 situé d'un côté du détecteur 100 est émetteur, tandis que les deux bobinages 142 et 143 situés sur le côté opposé du détecteur 100 sont récepteurs, un individu qui se déplace dans le détecteur 100 franchit successivement une première ligne privilégiée 141D qui relie les transducteurs 141 et 142 et s'étend transversalement à la direction de déplacement dans le détecteur de métal, puis une deuxième ligne privilégiée 143D qui relie les transducteurs 141 et 143 et est orientée en oblique par rapport à la direction de déplacement dans le détecteur de métal.

La figure 1b représente une variante de réalisation selon laquelle les moyens 140 sont formés de quatre transducteurs bobinage 141, 142, 143 et 144 répartis entre les panneaux latéraux 110, 120 sous forme de deux bobinages 141 et 144 dans un panneau latéral 120 et deux bobinages 142, 143 dans le panneau latéral opposé 110.

Les deux bobinages 141 et 144 situés dans un panneau latéral commun 120 sont espacés longitudinalement. Les deux bobinages 142 et 143 situés dans l'autre panneau latéral commun 110 sont également espacés longitudinalement.

Cette configuration permet également une détection de métal avec localisation du métal en trois dimensions. Cette localisation en trois dimensions est rendue possible par le fait que l'individu franchit là encore successivement plusieurs lignes privilégiées de détection qui correspondent à des lignes fictives reliant respectivement les centres des bobinages émetteurs et récepteurs. Ainsi si l'on considère arbitrairement que le bobinage 141 situé d'un côté du détecteur 100 est émetteur, tandis que les deux bobinages 142 et 143 situés sur le côté opposé du détecteur 100 sont récepteurs, un individu qui se déplace dans le détecteur 100 franchit successivement une première ligne privilégiée 141D transversale qui relie les transducteurs 141 et 142, puis une deuxième ligne privilégiée 143D oblique qui relie les transducteurs 141 et 143. De même si l'on considère arbitrairement que le bobinage 144 situé d'un côté du détecteur 100 est émetteur, tandis que les deux bobinages 142 et 143 situés sur le côté opposé du détecteur 100 sont récepteurs, un individu qui se déplace dans le détecteur 100 franchit successivement une ligne privilégiée 142D oblique qui relie les transducteurs 144 et 142, puis une ligne privilégiée 144D transversale qui relie les transducteurs 144 et 143.

Avantageusement les transducteurs 142 et 143 sont placés respectivement en regard des transducteurs 141 et 144.

On rappelle par ailleurs que chacun des quatre transducteurs 141, 142, 143 et 144 peut alternativement fonctionner en mode émetteur ou en mode récepteur.

Selon les figures 1a et 1b, les transducteurs 141, 142, 143 et 144 sont configurés sous forme d'un bobinage enroulé sur des colonnes respectives.

De préférence la largeur D de chaque colonne des transducteurs 141, 142, 143 et 144 représentés sur les figures 1a et 1b est comprise entre 140 et 300 mm, l'intervalle L entre deux colonnes adjacentes 141 et 144, ou 142 et 143, est de préférence compris entre 1,5 et 3 fois la largeur D, soit entre 210 mm et 900 mm, et donc un entraxe entre les paires de transducteurs compris entre 350 mm et 1200 mm, tandis que la distance transversale W entre les colonnes de deux transducteurs opposés 141 et 142 ou 144 et 143 est de préférence comprise entre 680 et 820 mm.

Ainsi l'angle formé entre les lignes de détection transversales 141D et 144D reliant les paires de transducteurs opposés, 141 et 142 d'une part et 144 et 143 d'autre part et les lignes de détection obliques 142D et 143D reliant des paires de transducteurs situés en diagonale, est compris entre 15° et 60°, soit typiquement de l'ordre de 30° à 45°.

Cet angle est important pour permettre notamment de localiser les cibles en métal sur la largeur de l'individu, c'est-à-dire déterminer si les cibles en métal sont situées plutôt sur la gauche ou sur la droite de l'individu. En définissant en effet des lignes de détection 142D et 143D obliques par rapport à la direction de déplacement de l'individu, cet angle impose des lignes de détection (142/144, 143/141, 144/142, 141/143) qui sont coupées en premier ou dernier lieu par un côté de l'individu.

La localisation entre l'avant et l'arrière sur l'individu des cibles en métal, est quant à elle opérée notamment lorsque l'avant ou l'arrière de l'individu traverse les lignes de détection transversales 141D et 144D (141/142, 143/144, 142/141, 144/143).

Bien entendu l'unité centrale 50 exploite l'ensemble des données détectées par l'ensemble des transducteurs récepteurs 141, 142, 143 et 144 pour préciser la localisation des cibles en métal, gauche/droit, avant/arrière. En effet les objets en métal détectés, qu'ils soient situés sur la gauche ou sur la droite de l'individu, sur l'avant ou l'arrière de l'individu, ont une influence lorsqu'ils coupent une ligne de détection que celle-ci soit transversale ou oblique.

La figure 1c représente une variante de réalisation proche des figures 1a et 1b selon laquelle les transducteurs à colonne 141, 144 et 142, 143 des figures 1a et 1b sont remplacés sur la figure 1c par des transducteurs de type panneau. Sur la figure 1c une option à trois transducteurs de type panneau 141, 142, 143 est représentée en traits continus. Une option à quatre transducteurs de type panneau 141, 142, 143, 144 est représentée également sous forme du quatrième transducteur 144 en traits discontinus.

De préférence la largeur D de chaque panneau des transducteurs 141, 142, 143 et 144 représentés sur la figure 1c est comprise entre 140 et 600 mm. Les valeurs de l'écart L entre les transducteurs, la distance transversale W entre les transducteurs et l'angle entre les lignes transversales et obliques de détection ainsi formées, indiquées pour les figures 1a et 1b restent applicables à la figure 1c.

Les panneaux latéraux 110, 120 logent également les moyens 130 formant des barrières de détection de passage réparties longitudinalement sur le trajet de déplacement dans le canal 102.

Les barrières de détection de passage 130 peuvent être formées de toute technologie connue, par exemple mais non limitativement de barrières optiques.

Selon le mode de réalisation particulier représenté sur les figures 1 il est ainsi prévu trois barrières de détection de passage 131, 132 et 133 successives le long du trajet de déplacement dans le détecteur de métal 100.

En pratique chaque barrière de détection de passage peut comprendre un émetteur 131.1, 132.1, 133.1 placé dans l'un des panneaux 110 ou 120 et un récepteur 131.2, 132.2, 133.2 placé en regard dans le panneaux opposé 120 ou 110. Le récepteur reçoit un signal de l'émetteur placé en regard tant qu'aucun obstacle n'est intercalé entre ce récepteur et cet émetteur. En revanche le récepteur ne reçoit pas le signal émis par l'émetteur en regard lorsqu'un individu vient se placer entre l'émetteur et le récepteur.

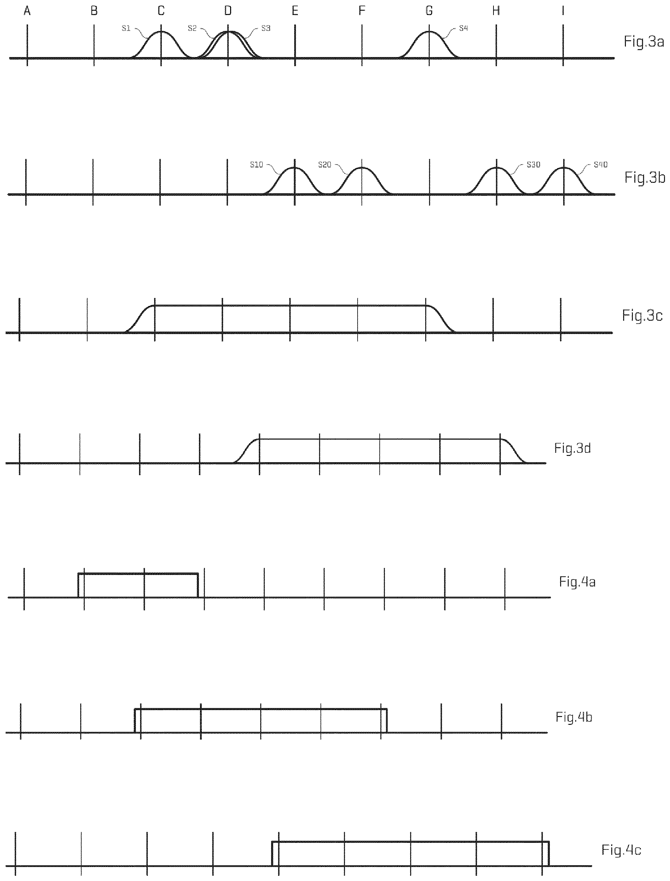

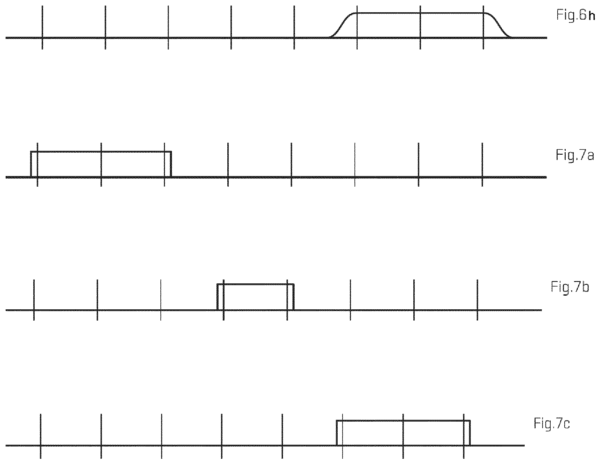

Les signaux correspondants reçus sur les récepteurs 131.2, 132.2, 133.2 lorsqu'un individu se déplace dans le canal 102 sont illustrés sur les figures 4a, 4b et 4c et sur les figures 7a, 7b et 7c.

Comme on le voit sur ces figures 4a, 4b et 4c et 7a, 7b et 7c, les sorties des récepteurs 131.2, 132.2, 133.2 changent successivement d'état, en logique positive ou négative, lors de la progression de l'individu dans le passage 102.

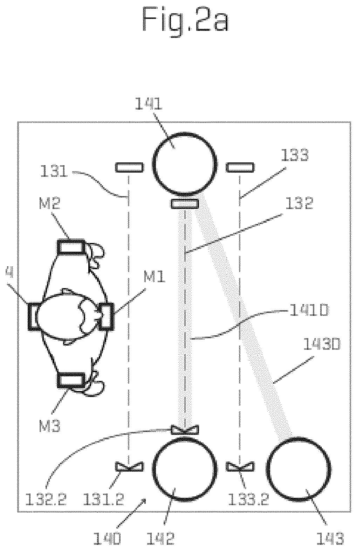

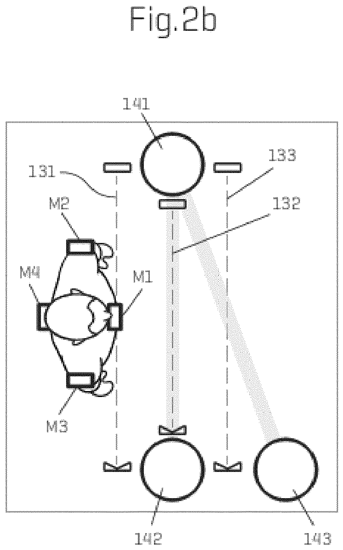

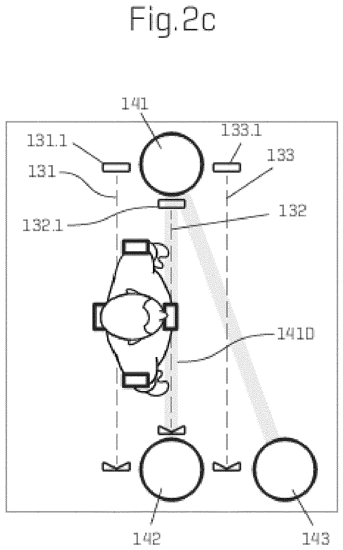

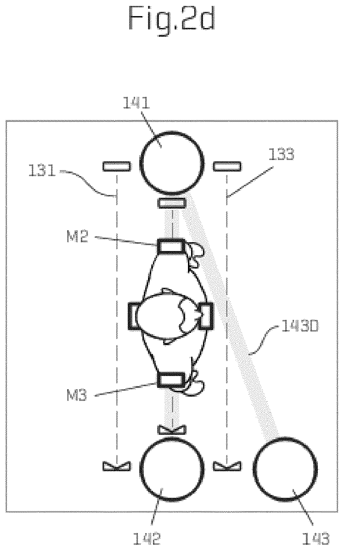

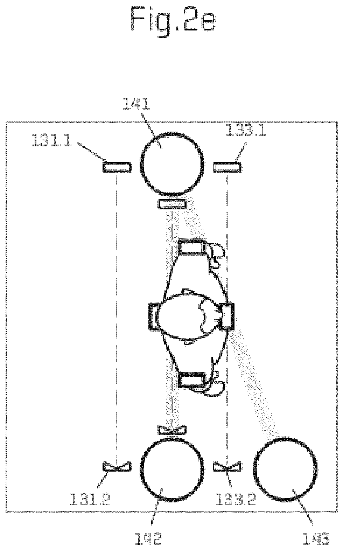

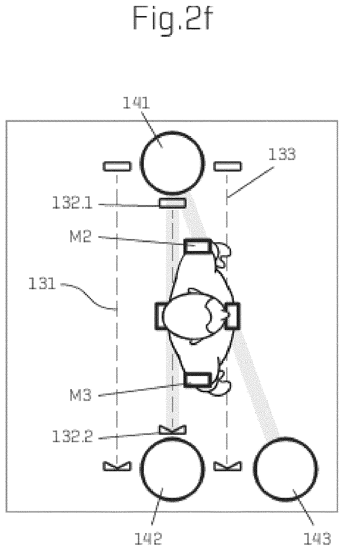

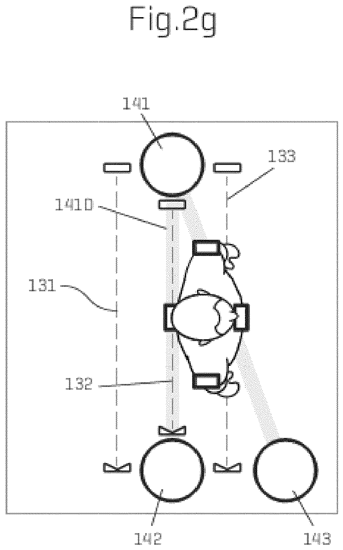

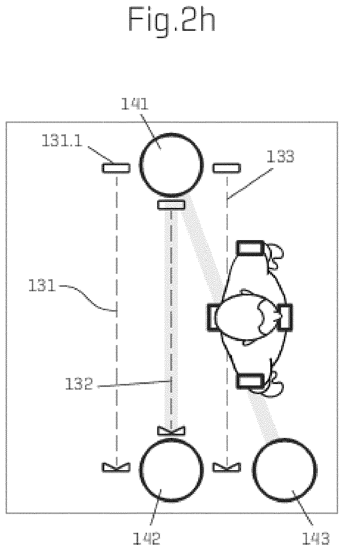

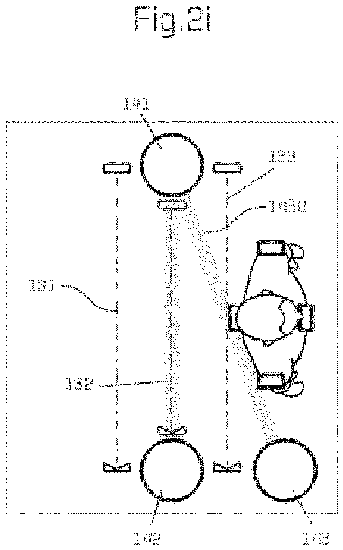

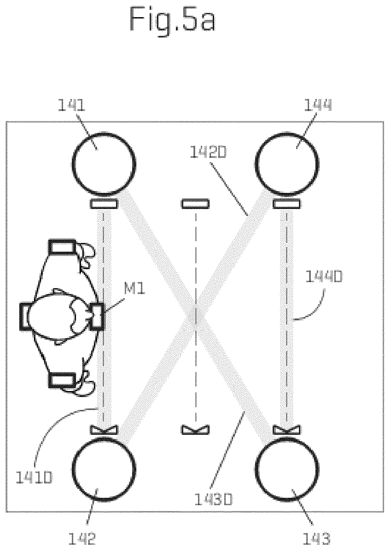

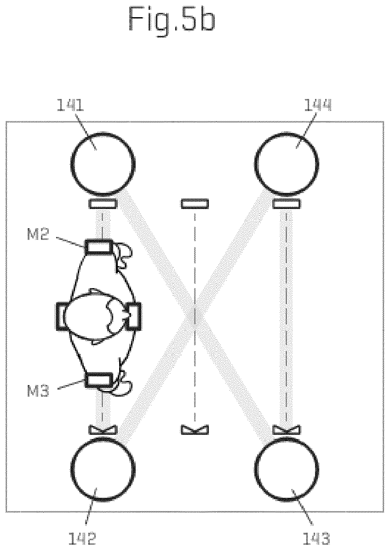

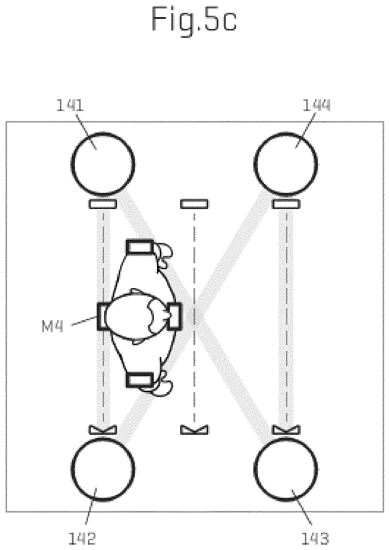

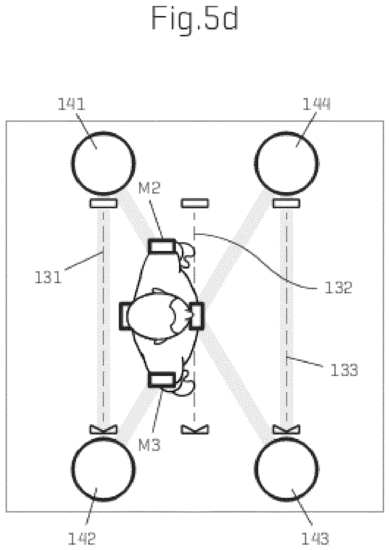

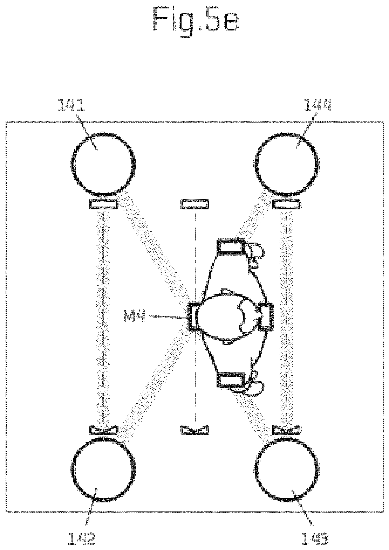

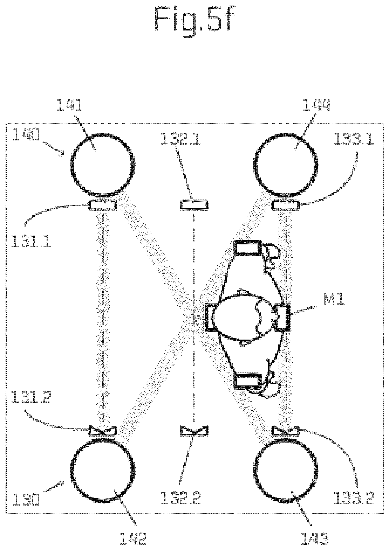

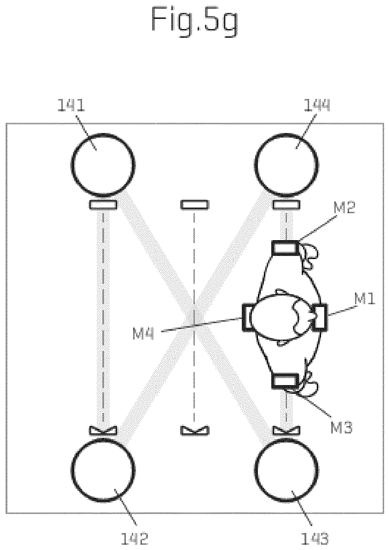

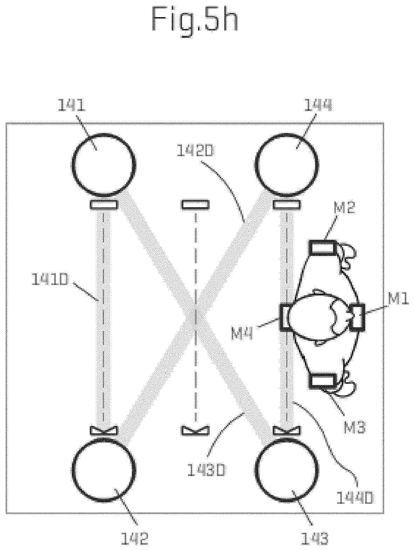

Le positionnement relatif entre les barrières de détection de passage 130, 131, 132 et 133 et les transducteurs détecteurs de métal 140, 141, 142 et 143 peut faire l'objet de différents modes de réalisation et n'est pas limité aux modes de réalisation illustrés sur les figures annexées. On notera par exemple que le positionnement des barrières de sécurité illustrées sur les figures 1a, 1b et 1c diffère de celui illustré sur les figures 2 et 5.

Selon le mode de réalisation schématisé sur les figures 1, les transducteurs 141 et 142, sont placés en regard, de part et d'autre du couloir 102, respectivement dans les panneaux 110, 120, au même niveau longitudinal dans le sens du passage dans le couloir 102. Ils définissent la ligne principale de détection transversale 141D. Le troisième transducteur 143 est décalé vers l'aval, en référence au sens de passage dans le couloir 102 par rapport au transducteur 142, dans le même panneau 110. Il définit en combinaison avec le transducteur 141 la ligne principale de détection oblique 143D. De même le quatrième transducteur 144 est décalé vers l'aval, en référence au sens de passage dans le couloir 102 par rapport au transducteur 141, dans le même panneau 120, en regard du transducteur 143. Il définit en combinaison avec le transducteur 143 la ligne principale de détection transversale 144D et il définit en combinaison avec le transducteur 142 la ligne de détection oblique 142D.

De préférence au moins une barrière de détection de passage 130 coïncide en position longitudinale avec une paire de transducteurs 140 et donc avec une ligne préférentielle de détection transversale 141D ou 144D. Selon les figures 1 et 5, la barrière 131 coïncide avec la paire de transducteurs 141 -142, tandis que la barrière 133 coïncide avec la paire de transducteurs 143 - 144. Selon la figure 2, la barrière 132 coïncide avec la paire de transducteurs 141 - 142.

De plus de préférence au moins une barrière de détection de passage 130 coïncide en position longitudinale avec le point de croisement entre deux lignes de détection obliques 142D et 143D. Selon les figures 1 et 5, la barrière 132 coïncide avec le point de croisement entre les deux lignes de détection obliques 142D et 143D.

Selon le mode de réalisation schématisé sur les figures 1, la première barrière de détection de passage 131 formée par l'émetteur 131.1 et le récepteur 131.2 est située au niveau du couple de transducteurs 141 et 142, c'est-à-dire sur l'entrée du détecteur de métal 100. La barrière de détection de passage centrale 132 formée par l'émetteur 132.1 et le récepteur 132.2 est située entre le couple de transducteurs 141 et 142 et le troisième transducteur 143 ou la paire de transducteurs 143 et 144. La troisième barrière de détection de passage 133 formée par l'émetteur 133.1 et le récepteur 133.2 est située au niveau des transducteurs 143 et 144.

Comme indiqué précédemment le positionnement des barrières de détection de passage 131, 132 et 133 par rapport aux transducteurs 140 peut faire l'objet de variantes de réalisation. Selon le mode de réalisation représenté sur la figure 2 la première barrière de détection de passage 131 formée par l'émetteur 131.1 et le récepteur 131.2 est située en amont du couple de transducteurs 141 et 142, sur l'entrée du détecteur de métal 100, la barrière de détection de passage centrale 132 formée par l'émetteur 132.1 et le récepteur 132.2 est située au niveau du couple de transducteurs 141 et 142 et la troisième barrière de détection de passage 133 formée par l'émetteur 133.1 et le récepteur 133.2 est située entre la paire de transducteurs 141 et 142 et les transducteurs 143 et 144 placés en aval.

Afin d'améliorer la détermination de la position d'objets métalliques M1, M2, M3, M4 porté(s) par un individu inspecté par le système, l'unité centrale 50 est configurée pour analyser et exploiter les signaux issus des barrières de détection de passage 130 et les signaux issus des transducteurs 140, et déduire de cette exploitation combinée la position du ou des objet(s) en métal M1, M2, M3, M4 par rapport à l'individu.

En effet, les signaux issus des au moins trois transducteurs 141, 142, 143 permettent, grâce aux lignes de détection transversales et obliques, de déterminer la position en largeur de l'objet métallique sur l'individu, c'est-à-dire si l'objet métallique se trouve plutôt sur la droite ou sur la gauche de l'individu. En revanche, ces lignes de détection ne permettent pas, à elles seules, d'identifier la position en profondeur de l'objet métallique, c'est-à-dire si l'objet métallique détecté par les transducteurs se trouve plutôt sur l'avant ou sur l'arrière de l'individu.

En revanche, grâce aux signaux issus des barrières de détection de passage 130, l'unité centrale 50 peut déterminer la position de l'individu par rapport aux transducteurs 140, et plus particulièrement la position de la face avant de l'individu. Les barrières de détection de passage 130 permettent ainsi à l'unité centrale 50 d'identifier une référence pour la face avant de l'individu, c'est-à-dire de positionner la limite du début du corps de l'individu.

Par exemple, dans le cas d'un détecteur 100 comprenant une barrière de détection de passage 132 au niveau d'un premier couple de transducteurs 141, 142 en regard (dans le sens de passage de l'individu dans le détecteur 100), lors du passage d'un individu dans le détecteur 100, la barrière 132 détecte ce passage génère un signal de détection de passage. L'unité centrale 50 en déduit donc la position, à un instant t, de la face avant de l'individu. Si aucun objet métallique n'est détecté par ce premier couple de transducteurs 141, 142 à l'instant t correspondant au passage de la face avant de l'individu, l'unité centrale 50 en déduit que l'individu ne porte pas d'objet métallique M1 au niveau de sa face avant. En revanche, en cas de détection d'un objet métallique M1-M4 par le premier couple de transducteurs 141, 142 à un moment décalé par rapport à l'instant t du signal de détection de passage généré par la barrière 132, l'unité centrale 50 en déduit que l'objet métallique M4 se situe plutôt au niveau de la face arrière de l'individu que de sa face avant.

Le même raisonnement s'applique lorsque la première barrière de détection de passage 130 est décalée par rapport au premier transducteur, en tenant compte d'un instant de décalage dû à la distance, dans le sens de passage de l'individu, entre la barrière de détection 130 et le couple de transducteurs 141, 142.

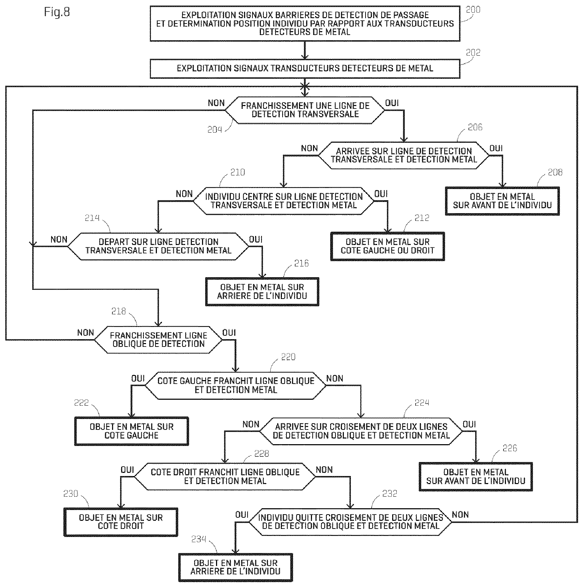

Dans une forme de réalisation, le détecteur 100 comprend plusieurs barrières de détection de passage 131, 132, 133. Cette forme de réalisation permet d'améliorer encore la détermination de la position des objets en métal M1-M4 sur l'individu, en particulier lors du franchissement des lignes de détection obliques et de l'éventuelle ligne de détection transversale formée entre deux autres couples de transducteurs 143, 144 en regard, et de valider la détection des objets métalliques M1-M4 et leur localisation sur le corps de l'individu (voir notamment l'organigramme en figure 8, étapes 208/226 et 216/234).

On va maintenant décrire les étapes principales du procédé conforme à l'invention utilisant un détecteur de métal à trois transducteurs inductifs 141, 142 et 143 du type illustré sur la figure 1a, en regard des figures 2, 3 et 4.

Les trois transducteurs 141, 142 et 143 permettent en combinaison une discrimination spatiale de la localisation des objets métalliques détectés.

En effet, et comme cela a été détaillé plus haut, l'analyse de l'évolution des signaux issus des barrières de détection de passage 130 représentés sur les figures 4a, 4b et 4c, qui permet de définir la position de l'individu dans le détecteur de métal 100 et par conséquent par rapport aux transducteurs 140, combinée avec l'analyse des signaux issus des transducteurs détecteurs de métal 140, permet à la fois la détection d'un objet métallique porté par un individu et la localisation du lieu en 3 dimensions du positionnement de cet objet sur le corps de l'individu.

Arbitrairement les figures 2, 3 et 4 illustrent le cas du passage à travers un portique détecteur de métal 100 conforme à l'invention, d'un individu portant des objets métalliques M1 sur son avant, M4 sur son arrière et M2 et M3 sur ses côtés gauche et droit.

Sur la figure 3a on a référencé S1, S2, S3 et S4, 4 composantes de signal issu du transducteur 142 récepteur associé à un transducteur émetteur 141 lors du passage successif des masses M1, M2, M3 et M4 par la ligne de détection transversale 141D.

Sur la figure 3b, on a référencé S10, S20, S30 et S40, 4 composantes de signal issu du transducteur 143 récepteur associé au transducteur émetteur 141 lors du passage successif des masses M1, M2, M3 et M4 par la ligne de détection oblique 143D.

L'on comprend en regard des figures 2, 3 et 4 annexées, données à titre d'exemple non limitatif que :
- la détection combinée du signal S1 sur le transducteur 142 et du signal issu de la barrière 132, lorsque l'individu atteint la barrière 132 et la ligne de détection transversale 141D, ce qui correspond à la position illustrée sur la figure 2c, permet de déceler la présence de l'objet métallique M1 placé sur l'avant de l'individu,
- la détection de métal par le signal S2 et S3 issu du transducteur 142 lorsque l'individu franchit la ligne de détection transversale 141D reliant l'émetteur 141 et le récepteur 142, ce qui correspond à la position illustrée sur la figure 2d (franchissement détecté par la barrière 132) permet de générer une alerte additionnelle de présence de métal, interprétée a priori comme la présence d'au moins un objet métallique sur au moins un côté de l'individu,
- la détection du signal S4 sur le transducteur 142 lorsque l'individu quitte la barrière 132 (qui ne détecte donc plus la présence de l'individu) et la ligne de détection transversale 141D, ce qui correspond à la position illustrée sur la figure 2g, permet de déceler la présence de l'objet métallique M4 placé sur l'arrière de l'individu,
- la détection du signal S10 sur le transducteur 143 et du signal issu de la barrière 133, lorsque l'individu atteint la barrière 133 et la ligne de détection oblique 143D, ce qui correspond à une position illustrée sur la figure 2e permet de valider la présence de l'objet métallique M1 sur l'avant de l'individu,
- la détection du signal S20 sur le même transducteur 143 lorsque l'individu progresse dans son franchissement de la barrière 133 et de la ligne de détection oblique 143D, comme illustré sur la figure 2f, permet de déceler la présence de l'objet métallique M2 sur le côté gauche de l'individu,
- la détection du signal S30 sur le même transducteur 143 lorsque l'individu progresse encore dans son franchissement de la barrière 133 et de la ligne de détection oblique 143D, comme illustré sur la figure 2h, permet de déceler la présence de l'objet métallique M3 sur le côté droit de l'individu, et
- la détection du signal S40 sur le transducteur 143 lorsque l'individu quitte la barrière 133 (qui ne détecte donc plus la présence de l'individu) et la ligne de détection oblique 143D, ce qui correspond à la position illustrée sur la figure 2i, permet de valider la présence de l'objet métallique M4 sur l'arrière de l'individu.

La localisation en hauteur des objets M1, M2, M3 et M4 sur l'individu est opérée de manière connue en soi selon les modalités classiques de détection de métal dans les portiques détecteurs connus, notamment grâce à une division des bobinages en hauteur afin de définir des zones distinctes de détection en hauteur.

On a décrit précédemment un exemple de réalisation selon lequel le transducteur 141 est émetteur et les transducteurs 142 et 143 placés sur le côté opposé sont récepteurs.

On peut cependant prévoir la disposition inverse, à savoir un transducteur 141 récepteur et des transducteurs 142 et 143 placés sur le côté opposé, émetteurs.

L'analyse des signaux issus des transducteurs 141, 142 et 143 associée à l'analyse des signaux issus des barrières de détection de passage 131, 132 et 133 reste identique.

Cependant dans ce cas les signaux illustrés sur les figures 3a et 3b correspondent aux signaux reçus sur le récepteur 141 lorsque respectivement les transducteurs 142 et 143 sont émetteurs. Ces signaux peuvent être distingués par les fréquences respectivement spécifiques des émetteurs 142 et 143.

De préférence chacun des transducteurs 141, 142 et 143 est très préférentiellement utilisé alternativement et successivement en émetteur et récepteur. L'on obtient ainsi une redondance de signaux qui permet de valider et fiabiliser la détection.

On a représenté schématiquement sur les figures 3c et 3d, des signaux issus des transducteurs récepteurs 142 et 143 dans l'hypothèse d'un objet métallique entourant totalement la section de l'individu examiné, par exemple entourant la taille de l'individu. Comme on le voit sur la figure 3c, dans ce cas un signal de détection d'objet métallique est initié dès que la barrière de détection 132 génère un signal de détection de présence, lorsque l'individu commence à franchir la barrière de détection 132 et la ligne de détection transversale 141D comme illustré sur la figure 2c et prend fin lorsque la barrière de détection 132 ne détecte plus la présence de l'individu, c'est-à-dire lorsque l'individu a dépassé la barrière 132 et la ligne de détection transversale 141D comme illustré sur la figure 2g. De manière comparable comme on le voit sur la figure 3d, un signal de détection d'objet métallique est initié dès que la barrière de détection 133 génère un signal de détection de présence, lorsque l'individu commence à franchir la ligne de détection oblique 143D comme illustré sur la figure 2e et prend fin lorsque la barrière de détection 133 ne détecte plus la présence de l'individu, c'est-à-dire lorsque l'individu a dépassé la barrière de détection 133 et la ligne de détection oblique 143D comme illustré sur la figure 2i.

Lorsque la cible métallique n'est pas formée d'une ceinture continue entourant l'individu, mais d'une série d'objets discrets répartis sur la périphérie de l'individu, le signal issu des transducteurs récepteurs 142 et 143 est formé d'une série d'impulsions réparties dans le temps entre le début et la fin du franchissement des barrière de détection 132, 133 et des lignes de détection transversale 141D et oblique 143D, de manière comparable aux figures 3a et 3b.

On a représenté sur la figure 5 une variante de réalisation selon laquelle le détecteur de métal 100 comprend quatre transducteurs 141, 142, 143 et 144 formant deux émetteurs et deux récepteurs, disposés sous forme de deux transducteurs situés sur un premier côté du passage 102 et deux transducteurs disposés sur le côté opposé de ce passage 102, respectivement dans les panneaux latéraux 110 et 120, conformément à la figure 1b.

On rappelle que chacun de ces transducteurs 141, 142, 143 et 144 peut alternativement former un émetteur et un récepteur. Lorsqu'il constitue un émetteur il coopère de préférence avec deux récepteurs placés sur le côté opposé du couloir 102. Lorsqu'il constitue un récepteur il coopère de préférence avec deux émetteurs placés sur le côté opposé du couloir 102.

Les quatre transducteurs 141, 142, 143 et 144 définissent ainsi quatre zones ou lignes principales de détection 141D, 144D, 143d et 142D définies respectivement entre les transducteurs 141 et 142, 144 et 143, 141 et 143, 144 et 142.

De préférence la fréquence des signaux émis par un émetteur 140 et détectés respectivement sur deux récepteurs associés diffère d'un récepteur à l'autre et de même la fréquence des signaux émis par deux émetteurs 140 et destinés à être détectés par un récepteur commun diffère d'un émetteur à l'autre pour permettre de distinguer la zone ou ligne principale de détection 141D, 142D, 143D ou 144D concernée.

On va maintenant décrire les étapes principales du procédé conforme à l'invention utilisant un détecteur de métal à quatre transducteurs inductifs 141, 142, 143, 144 du type illustré sur la figure 1b, en regard des figures 5, 6 et 7, là encore arbitrairement dans le cas du passage à travers un portique détecteur de métal 100 conforme à l'invention, d'un individu portant des objets métalliques M1 sur son avant, M4 sur son arrière et M2 et M3 sur ses côtés gauche et droit.

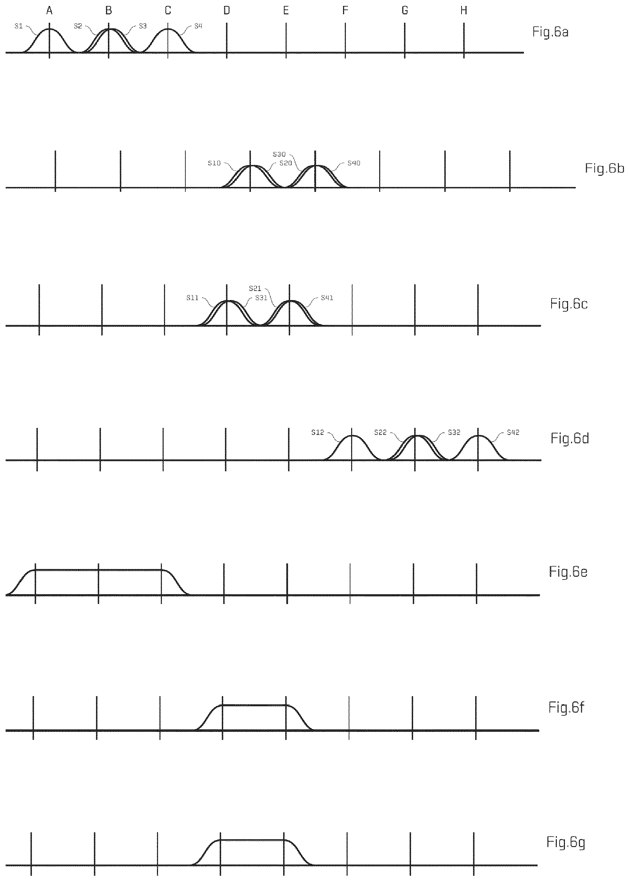

On a représenté sur la figure 6a le signal S1, S2, S3, S4 issu du transducteur récepteur 142 lorsque le transducteur 141 en regard est émetteur.

On a représenté sur la figure 6b le signal S10, S20, S30, S40 issu du transducteur récepteur 143 lorsque le transducteur 141 en diagonale est émetteur.

On a représenté sur la figure 6c le signal S11, S21, S31, S41 issu du transducteur récepteur 142 lorsque le transducteur 144 en diagonale est émetteur.

On a représenté sur la figure 6d le signal S12, S22, S32, S42 issu du transducteur récepteur 143 lorsque le transducteur 144 en regard est émetteur.

On rappelle que selon le mode de réalisation représenté sur la figure 5, les quatre transducteurs 141, 142, 143 et 144 sont associés à trois barrières de détection de passage 131, 132 et 133 successives le long du trajet de déplacement dans le détecteur de métal 100.

Selon le mode de réalisation particulier et non limitatif illustré sur les figures 5, la barrière d'entrée 131 coïncide avec la ligne de détection transversale 141D et la paire de transducteurs 141 et 142, la barrière de sortie 133 coïncide avec la ligne de détection transversale 144D et la paire de transducteurs 143 et 144, et la barrière intermédiaire 132 coïncide avec le point de croisement entre les deux lignes de détection oblique 143D et 144D.

Les barrières de détection de passage 130 peuvent là encore être formées de toute technologie connue, par exemple mais non limitativement de barrières optiques.

En pratique chaque barrière de détection de passage peut comprendre de manière similaire à la figure 2, un émetteur 131.1, 132.1, 133.1 placé dans l'un des panneaux 110 ou 120 et un récepteur 131.2, 132.2, 133.2 placé en regard dans le panneaux opposé 120 ou 110. Le récepteur reçoit un signal de l'émetteur placé en regard tant qu'aucun obstacle n'est intercalé entre ce récepteur et cet émetteur. En revanche le récepteur ne reçoit pas le signal émis par l'émetteur en regard lorsqu'un individu vient se placer entre l'émetteur et le récepteur.

Les signaux correspondants reçus sur les récepteurs 131.2, 132.2, 133.2 lorsqu'un individu se déplace dans le canal 102 sont illustrés sur les figures 7a, 7b et 7c.

Comme on le voit sur ces figures 7a, 7b et 7c, les sorties des récepteurs 131.2, 132.2, 133.2 changent successivement d'état, en logique positive ou négative, lors de la progression de l'individu dans le passage 102.

Le positionnement relatif entre les barrières de détection de passage 131, 132 et 133 et les transducteurs détecteurs de métal 140 peut faire l'objet de différents modes de réalisation et n'est pas limité à la disposition représentée sur la figure 5.

L'on comprend notamment en regard des figures 5, 6 et 7 annexées, données à titre d'exemple non limitatif que :
- la détection d'un objet métallique M1 porté par un individu sur l'avant de son corps peut être opérée grâce aux barrières de détection de passage 131 et 133 (en combinaison avec les signaux S1, S10, S11 et S12) dont les signaux permettent à l'unité centrale 50 de déterminer que l'individu atteint et commence à franchir les lignes de détection 141D et 144D formées respectivement entre la paire de transducteurs 141 et 142 et la paire de transducteurs 143 et 144 (ces positions sont représentées sur les figures 5a et 5f et correspondent également au franchissement des barrières de passage 131 et 133), ainsi que lorsque l'individu atteint le croisement des lignes de détection 142D et 143D et la barrière de passage centrale 132 comme représenté sur la figure 5d,
- la détection d'un objet métallique M2 sur le côté gauche de l'individu peut être opérée (signal S20, S21) lorsque l'individu franchit la première ligne de détection oblique 143D définie entre les transducteurs 141 et 143 (cette position est représentée sur la figure 5d) ou lorsque l'individu franchit la deuxième ligne de détection oblique 142D définie entre les transducteurs 142 et 144 (cette position est représentée sur la figure 5e). Accessoirement la détection d'un objet métallique M2 sur le côté gauche de l'individu peut être opérée également (signal S2, S22) lors du franchissement des lignes de détection transversales 141D et 144D coïncidant avec les barrières 131 et 133 comme illustré sur les figures 5b et 5g,
- la détection d'un objet métallique M3 sur le côté droit de l'individu peut être opérée (signal S30, S31) lorsque l'individu franchit la première ligne de détection 142D définie entre les transducteurs 142 et 144 (cette position est également représentée sur la figure 5d) ou lorsque l'individu franchit la deuxième ligne de détection oblique 143D définie entre les transducteurs 141 et 143 (cette position est représentée sur la figure 5e) ; la détection de l'objet M3 situé sur le côté droit de l'individu peut également être opérée (signal S3, S32) lorsque cet objet franchit les lignes de détection transversales 141D et 144D comme représenté sur les figures 5b et 5g et
- la détection d'un objet métallique M4 porté par un individu sur l'arrière de son corps peut être opérée grâce aux barrières de détection de passage 131 et 133 (en combinaison avec les signaux S4, S42) dont les signaux permettent à l'unité centrale 50 de déterminer que l'individu quitte les lignes de détection 141D et 144D formées respectivement entre la paire de transducteurs 141 et 142 et la paire de transducteurs 143 et 144 (ces positions correspondent également au franchissement des barrières de passage 131 et 133 illustré sur les figures 5c et 5h), ainsi que (signal S40, S41) lorsque l'individu atteint le croisement des lignes de détection 142D et 143D et la barrière de passage centrale 132 (figure 5e).

On rappelle que de manière similaire à la figure 2, la localisation en hauteur des objets M1, M2, M3 et M4 sur l'individu est opérée de manière connue en soi selon les modalités classiques de détection de métal dans les portiques détecteurs connus, notamment grâce à une division des bobinages en hauteur afin de définir des zones distinctes de détection en hauteur.

On a représenté schématiquement sur les figures 6e, 6f, 6g et 6h, des signaux issus des transducteurs récepteurs 142, 143 lorsque les transducteurs 141 et 144 sont successivement émetteurs, dans l'hypothèse d'un objet métallique entourant totalement la section de l'individu examiné, par exemple entourant la taille de l'individu. Comme on le voit sur les figures 6e à 6h, dans ce cas les transducteurs 142 et 143 initient un signal de détection d'objet métallique lorsque l'individu commence à franchir la ligne de détection correspondante et met fin à ce signal de détection lorsque l'individu a dépassé la ligne de détection correspondante.

Lorsque la cible métallique n'est pas formée d'une ceinture continue entourant l'individu, mais d'une série d'objets discrets répartis sur la périphérie de l'individu, le signal issu des transducteurs récepteurs 142 et 143 est formé d'une série d'impulsions réparties dans le temps entre le début et la fin du franchissement des barrière de détection et des lignes de détection transversale 141D, 144D et oblique 142D, 143D, de manière comparable aux figures 6a, 6b, 6c et 6d.

L'on comprend à la lecture de la description qui précède que le dispositif conforme à l'invention qui combine un détecteur de métal 100 comprenant au moins trois transducteurs détecteurs 140, 141, 142 et 143, voire 144, et des barrières de détection de passage 130, 131, 132 et 133, permet par recherche de coïncidence entre les signaux issus du détecteur de métal 100 formé par les transducteurs 140 et les signaux issus des barrières de détection de passage 130 ou interprétation des signaux issus des transducteurs 140 sur la base des signaux issus des barrières de détection de passage 130, qui permettent de positionner un individu dans le couloir 102, de discriminer la position d'un objet détecté en métal, d'une part dans le sens de la largeur du passage, transversalement à la direction de déplacement, typiquement sur la gauche ou sur la droite d'un individu, et d'autre part dans le sens de la profondeur, soit longitudinalement parallèlement à la direction de déplacement, typiquement sur l'avant ou sur l'arrière d'un individu.

Comme on l'a indiqué en préambule l'invention concerne également un procédé de détection d'objets métalliques portés par un individu à l'aide du dispositif précité comprenant un détecteur de métal 100 perfectionné. Ce procédé comprend notamment les étapes qui consistent à opérer une détection d'objets métalliques portés par un individu avec localisation dans l'espace en 3 dimensions sur l'individu des objets métalliques détectés à l'aide du détecteur de métal 100.

On a schématisé sur la figure 8 un exemple non limitatif de mise en oeuvre du procédé de détection conforme à la présente invention.

On aperçoit sur la figure 8 un organigramme qui comprend les étapes suivantes :
- Etape initiale 200 d'exploitation des signaux issus des barrières de détection de passage 130 et détermination de la position de l'individu par rapport aux transducteurs 140 détecteurs de métal,
- Etape 202 d'exploitation des signaux issus des transducteurs 140 détecteurs de métal,
- Etape 204 de recherche du franchissement d'une ligne de détection transversale 141D, 144D,
- Dans l'affirmative, Etape 206 de recherche si ce franchissement correspond à l'arrivée sur une ligne de détection transversale assortie d'une détection de métal,
- Dans l'affirmative, Etape 208 de validation de la détection d'un objet métallique M1 sur l'avant d'un individu,
- En cas de réponse négative à l'étape 206, Etape 210 de recherche d'un individu centré sur une ligne de détection transversale assortie d'une détection de métal,
- Dans l'affirmative, Etape 212 de validation de la détection d'un objet métallique M2 et/ou M3 sur un côté gauche ou droit d'un individu,
- En cas de réponse négative à l'étape 210, Etape 214 de recherche si ce franchissement correspond au départ ou fin de franchissement d'une ligne de détection transversale assortie d'une détection de métal,
- Dans l'affirmative, Etape 216 de validation de la détection d'un objet métallique M4 sur l'arrière d'un individu,
- En cas de réponse négative à l'étape 204 ou 214, Etape 218 de recherche du franchissement d'une ligne de détection oblique 142D, 143D,
- Dans l'affirmative, Etape 220 de recherche si ce franchissement correspond au franchissement de la ligne de détection oblique par le côté gauche de l'individu assortie d'une détection de métal,
- Dans l'affirmative, Etape 222 de validation de la détection d'un objet métallique M2 sur le côté gauche d'un individu,
- En cas de réponse négative à l'étape 220, Etape 224 de recherche d'un individu qui arrive sur un croisement entre deux lignes de détection oblique assortie d'une détection de métal,
- Dans l'affirmative, Etape 226 de validation de la détection d'un objet métallique M1 sur l'avant d'un individu,
- En cas de réponse négative à l'étape 224, Etape 228 de recherche si ce franchissement correspond au franchissement de la ligne de détection oblique par le côté droit de l'individu assortie d'une détection de métal,
- Dans l'affirmative, Etape 230 de validation de la détection d'un objet métallique M3 sur le côté droit d'un individu,
- En cas de réponse négative à l'étape 228, Etape 232 de recherche d'un individu qui quitte un croisement entre deux lignes de détection oblique assortie d'une détection de métal,
- Dans l'affirmative, Etape 234 de validation de la détection d'un objet métallique M4 sur l'arrière d'un individu, et
- Rebouclage à l'étape 204 en cas de réponse négative à l'issue des étapes 218 et 232.

Les étapes illustrées sur la figure 8 peuvent ne pas être toutes mises en oeuvre selon la configuration des transducteurs retenue.

Par ailleurs l'ordre et la chronologie des étapes illustrées sur la figure 8 peuvent être modifiés.

Le procédé conforme à la présente invention peut par ailleurs comprendre des étapes qui consistent à retirer de la signature superposée Sx d'objets métalliques identifiés à une étape Tx, la signature Sn d'au moins un objet métallique préalablement clairement identifié, lorsque l'analyse détermine que la signature superposée Sx inclut la signature Sn, afin de faciliter l'identification individuelle dessignatures de chaque objet métallique.

Comme on l'a indiqué précédemment, l'invention concerne également une application particulière du détecteur de métal 100 précédemment décrit selon laquelle le détecteur de métal, qui forme un moyen de détection de type champ inductif, est intégré à un scanner corporel 10, qui forme un moyen de détection de type à imagerie à champ micro-ondes.

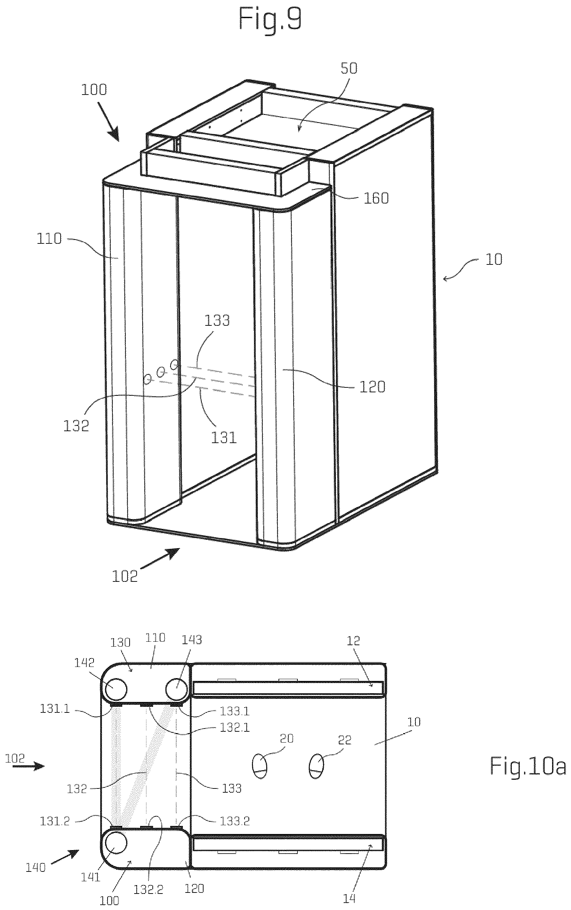

On a ainsi représenté sur la figure 9 annexée un dispositif conforme à la présente invention comprenant un scanner corporel 10 qui intègre un détecteur de métal 100.

Le scanner corporel 10 peut faire l'objet de tous modes de réalisation connus. Il ne sera donc pas décrit par la suite.

Le scanner corporel 10 procède essentiellement par mesure de l'énergie micro-onde réfléchies et/ou absorbées en fonction des propriétés des matériaux examinés, notamment en fonction des propriétés diélectriques et de la perméabilité magnétique.

A titre d'exemple non limitatif, le scanner corporel 10 peut être conforme aux dispositions décrites dans le document EP 2 202 700.

Le détecteur de métal 100 est placé de préférence en entrée du scanner corporel 10. Il définit le canal ou couloir de passage 102 que doit emprunter tout individu pour atteindre le scanner corporel 10.

Les modalités d'intégration du détecteur de métal 100 dans le scanner corporel 10 peuvent faire l'objet de différentes variantes de réalisation.

Sur la figure 10a on a représenté un détecteur de métal 100 du type représenté sur la figure 1a, à trois transducteurs en colonnes 141, 142 et 143, disposé en amont d'un scanner corporel 10 comprenant un émetteur 12 et un récepteur 14 disposés dans des panneaux respectivement opposés, encadrant la chambre d'examen du scanner corporel 10.

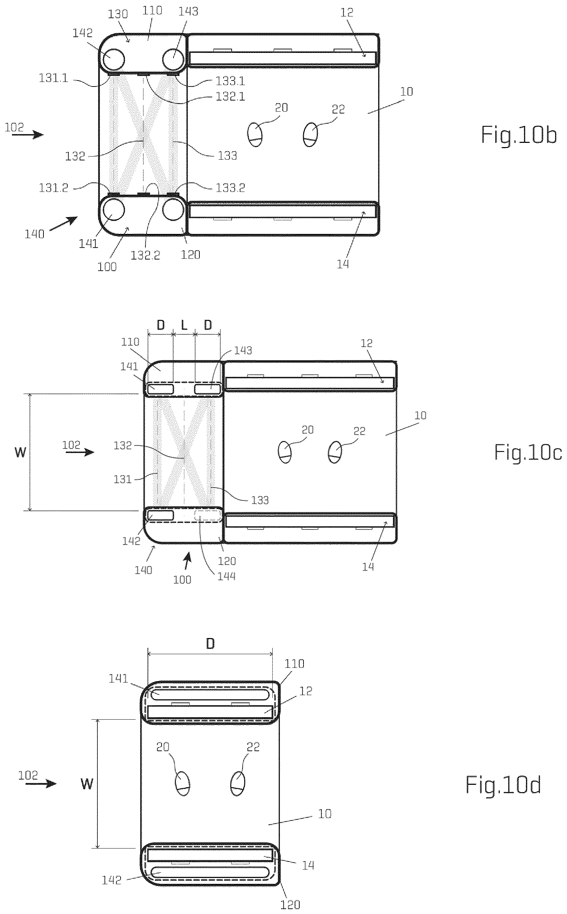

Sur la figure 10b on a représenté un détecteur de métal 100 du type représenté sur la figure 1b, à quatre transducteurs en colonnes 141, 142, 143 et 144, disposé en amont d'un scanner corporel 10 comprenant un émetteur 12 et un récepteur 14 disposés dans des panneaux respectivement opposés, encadrant la chambre d'examen du scanner corporel 10.

Sur la figure 10c on a représenté un détecteur de métal 100 du type représenté sur la figure 1bc, à trois ou quatre transducteurs de type panneau 141, 142, 143 et 144, disposé en amont d'un scanner corporel 10 comprenant un émetteur 12 et un récepteur 14 disposés dans des panneaux respectivement opposés, encadrant la chambre d'examen du scanner corporel 10.

Sur la figure 10d on a représenté une variante de l'invention selon laquelle le détecteur de métal 100 n'est pas disposé en amont du scanner corporel 10, mais est colocalisé avec le scanner corporel 10, c'est-à-dire intégré dans les panneaux du scanner corporel 10 qui logent l'émetteur 12 et le récepteur 14 encadrant la chambre d'examen du scanner corporel 10. Le détecteur de métal 100 ainsi intégré dans les panneaux du scanner corporel 10 peut être conforme à l'une quelconque des variantes de réalisation illustrées sur les figures 1a à 1c, c'est-à-dire peut comprendre trois ou quatre transducteurs, en colonnes ou en panneaux.

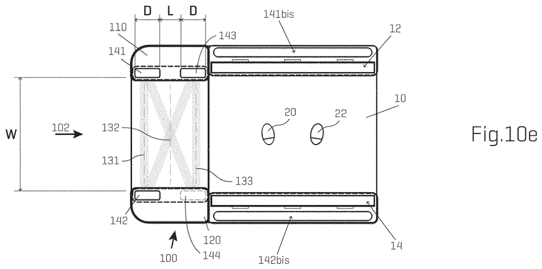

Sur la figure 10e on a représenté une variante de l'invention selon laquelle il est prévu un premier détecteur de métal 100 en amont du scanner corporel 10, et un deuxième détecteur de métal 100bis colocalisé avec le scanner corporel 10, c'est-à-dire intégré dans les panneaux du scanner corporel 10 qui logent l'émetteur 12 et le récepteur 14 encadrant la chambre d'examen du scanner corporel 10. Le détecteur de métal 100 disposé en amont du scanner corporel 10 peut être conforme à l'une quelconque des variantes de réalisation illustrées sur les figures 1a à 1c, c'est-à-dire peut comprendre trois ou quatre transducteurs, en colonnes ou en panneaux. Il peut en variante ne comprendre que deux transducteurs 140 disposés respectivement de part et d'autre du canal 102, pour opérer une détection de présence d'un objet métallique. Le détecteur de métal 100bis intégré dans les panneaux du scanner corporel 10 peut être conforme à l'une quelconque des variantes de réalisation illustrées sur les figures 1a à 1c, c'est-à-dire peut comprendre trois ou quatre transducteurs, en colonnes ou en panneaux.

Un mode de réalisation conforme à la représentation de la figure 10e, selon lequel des moyens de détection de métal 140 permettant une détection 3D sont colocalisés avec le scanner corporel 10, mais cependant il est également prévu des moyens de détection de métal 100 additionnels permettant une détection 1D en amont du scanner corporel 10, présente l'avantage que avec cette configuration on peut exploiter le détecteur de métal 1D amont à induction optimisé pour la discrimination entre la présence ou non d'objets métalliques et le pilotage en conséquence de la sensibilité du scanner corporel 10 pour limiter au minimum le nombre d'alarmes intempestives et le détecteur de métal 3D colocalisé avec le scanner corporel 10 à induction optimisé pour la localisation des objets métalliques et obtenir ainsi un maximum de précision dans la localisation des objets métalliques.

Comme indiqué précédemment dans le cadre de l'invention de préférence le résultat de l'analyse de type inductif visant la recherche d'un objet métallique et le résultat de l'analyse par imagerie à base de micro-ondes sont visualisés sur un écran unique mis à disposition d'un opérateur.

Selon un mode de réalisation particulier conforme à la présente invention, dans le cas de détection par le champ inductif d'une ou de plusieurs cibles, la sensibilité du système d'imagerie à microondes 10 est présélectionnée au niveau « métal & diélectrique » seulement dans la(les) zone(s) où le système inductif 100 a déterminé la présence de(s) cible(s) métallique(s), tandis que dans les autre zones la sensibilité du système d'imagerie à microondes 10 est présélectionné au niveau « diélectrique ». Dans le cas d'utilisation d'un système inductif 1D les zones susmentionnées sont définies en hauteur seulement, tandis que dans le cas d'utilisation d'un système inductif 3D les zones sont définies en hauteur, largeur et profondeur.

Comme on l'a indiqué en préambule, l'invention concerne également un procédé de détection d'objets frauduleux portés par un individu à l'aide du dispositif précité comprenant en combinaison un scanner corporel 10 et un détecteur de métal 100 intégré au scanner corporel 10. Ce procédé comprend notamment les étapes qui consistent à opérer une détection d'objets métalliques portés par un individu avec localisation dans l'espace en 3 dimensions sur l'individu des objets métalliques détectés à l'aide du détecteur de métal 100 et à piloter le scanner corporel 10 en adaptant la sensibilité du scanner corporel 10, au moins sur une zone d'intérêt, lorsque le détecteur de métal décèle la présence d'un objet métallique.

L'invention permet ainsi de focaliser une zone d'intérêt d'analyse par le scanner corporel 10 sur une zone contenant les objets métalliques M1, M2, M3 et/ou M4 détectés par le détecteur de métal 100, en concentrant l'analyse réalisé par le scanner corporel 10 sur cette zone d'intérêt.

Plus précisément dans le cadre de l'invention, la sensibilité du scanner corporel 10 formant moyens d'analyse par imagerie à base de micro-ondes, est placée à un niveau élevé lorsque les moyens de détection de type inductif décèlent la présence possible d'une cible métallique, au moins sur la zone d'intérêt identifiée par le détecteur de métal, et au contraire est placée à un niveau plus faible lorsque les moyens de détection de type inductif ne décèlent pas la présence possible d'une cible métallique.

Ainsi dans le cadre de l'invention, si les moyens d'analyse de type inductif que constituent le détecteur de métal 100, ne décèlent pas la présence potentielle d'objets métalliques, la sensibilité des moyens d'analyse par imagerie à base de micro-ondes que constitue le scanner corporel 10, peut rester relativement faible, à un niveau adéquat pour la détection d'objets non métalliques.

Le taux élevé habituel de fausses alarmes résultant de l'utilisation des moyens d'analyse à base d'imagerie à micro-ondes (généralement de l'ordre de 65% à 85%) étant limité selon l'invention aux seuls cas de détection d'un objet métallique préalable par le détecteur de métal associé de type inductif (eux-mêmes de l'ordre de 10%), le taux global de fausses alarmes résultant d'un scanner corporel conforme à la présente invention, est relativement faible. Pour les 90% d'individus restant sur lesquels les moyens détecteurs de métal ne détectent pas d'objet métallique, le scanner corporel est en effet placé sur un niveau de sensibilité faible. Le taux global de fausses alarmes résultant d'un scanner corporel conforme à la présente invention chute ainsi typiquement dans une plage comprise entre 10 et 20%.

L'homme de l'art comprendra que le pilotage de la sensibilité des moyens d'analyse par imagerie à base de micro-ondes, en augmentant la sensibilité de ces moyens d'analyse par imagerie à base de micro-ondes formant scanner corporel, dans les seuls cas où un objet métallique a été préalablement détecté par les moyens détecteurs de métaux, permet de réduire considérablement le taux global de fausses alarmes du système conforme à la présente invention.

Statistiquement, on peut considérer que les critères de détection d'une alarme de type métallique par induction se révélant dans moins de 10% d'une population examinée, au moins 90% des personnes inspectées ne seront inspectées que pour des cibles de type diélectrique (non métalliques) par le scanner corporel à base de micro-ondes, avec un champ micro-ondes à sensibilité réduite conduisant à un taux global de fausses alarmes très sensiblement réduit.

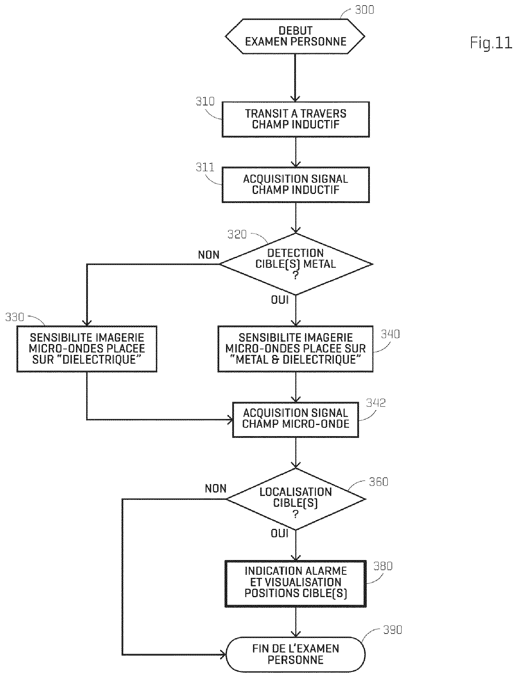

On aperçoit sur la figure 11 un organigramme schématisant les étapes principales du procédé de détection conforme à l'invention mettant en oeuvre un détecteur de métal 100 intégré dans un scanner corporel 10, qui comprend les étapes successives suivantes :
- étape 300 : début de l'examen d'une personne. A ce stade, un individu à examiner est invité à entrer dans le scanner corporel conforme à l'invention, en passant par le détecteur de métal 100,
- étape 310 : début du transit de l'individu à travers le champ inductif généré par le détecteur de métal 100, plus précisément par les bobinages 140. Au cours de cette étape l'individu examiné traverse/s'arrête, franchit la zone d'inspection à champ inductif (on rappelle que comme indiqué précédemment la zone d'inspection à base de champ inductif peut être située en amont du scanner corporel 10 proprement dit comme illustré sur la figure 9 et les figures 10a à 10c ou recouvrir la zone du scanner corporel 10 comme illustré sur les figures 10d et 10e),
- étape 311 : acquisition du signal correspondant au champ inductif,
- étape 320 : analyse des signaux issus du détecteur de métal 100 pour rechercher si une détection d'une cible en métal a été opérée ou non.
- étape 330 mise en oeuvre en cas de réponse négative à l'étape de détection d'une cible 320 : l'unité centrale du système positionne la sensibilité de l'imagerie micro-ondes 10 sur un niveau de sensibilité faible « diélectrique ». La modification de la sensibilité de l'imagerie micro-ondes 10 est réalisée en modifiant des paramètres de traitement de l'image microondes par l'unité centrale en vue de déterminer si, en fonction des signaux générés par le détecteur de métal 100, des instructions de génération d'une alarme (sonore et/ou optique) doivent être envoyées par l'unité centrale 50 à un dispositif d'alerte adapté. Dans le cas d'espèce, le détecteur de métal 100 n'ayant pas détecté de cible métallique, l'unité centrale modifie les paramètres de traitement de l'image microondes de sorte à procéder à une analyse au niveau du scanner corporel 10 sur la base d'une sensibilité d'imagerie dans un champ d'inspection micro-ondes qui correspond à un niveau juste nécessaire pour opérer la détection de cibles diélectriques, c'est-à-dire une sensibilité plus faible que celle requise pour une détection des cibles métalliques. Cette disposition permet de limiter le risque de fausses alarmes.
- étape 340 mise en oeuvre en cas de réponse positive à l'étape 320 : l'unité centrale positionne la sensibilité d'imagerie micro-ondes 10 cette fois à un niveau de sensibilité plus élevé « métal & diélectrique » permettant une détection à la fois de cibles métalliques et de cibles diélectriques. Ici encore, la modification de la sensibilité de l'imagerie micro-ondes 10 est réalisée en modifiant les paramètres de traitement de l'image microondes par l'unité centrale 50. En particulier, cette modification de la sensibilité permet de détecter à la fois des cibles métalliques et des cibles diélectriques. Bien que plus rigoureuse et susceptible de générer un niveau de fausses alarmes, cette disposition est requise du fait que le détecteur de métal 100 a détecté la présence potentielle de métal amont (ceci n'intervenant que dans 10% des cas, bien que conduisant intrinsèquement à un risque de taux de fausses alarmes élevé, n'induit pas un taux global de risques de fausses alarmes conséquent).
- étape 342 : acquisition du signal des moyens de détection dans le champ micro-ondes 10. Au cours de cette étape, l'individu inspecté est scanné par le champ d'inspection micro-ondes 10. Les données pertinentes issues des moyens de détection sont collectées et analysées.
- étape 360 : au cours de cette étape l'unité centrale analyse les signaux issus des moyens de détection micro-ondes 10 et recherche si ceux-ci correspondent à la localisation d'une cible. Pour cela, les moyens d'analyse 50 effectuent un traitement de l'image microonde en tenant compte de la sensibilité d'imagerie micro-ondes déterminée à l'étape 330 ou à l'étape 340, selon la réponse à l'étape 320.

On comprendra que, dans une variante de réalisation, l'étape 340 de modification de la sensibilité peut en variante être simultanée ou ultérieure à l'étape 342 d'acquisition, la modification de la sensibilité correspondant à une modification des paramètres de traitement de l'image microonde
- étape 380 mise en oeuvre en cas de réponse positive à l'étape 360 : indication d'une alarme et visualisation de la position des cibles sur l'image microonde générée par l'unité centrale 50. La visualisation de l'alarme est mise à disposition d'un opérateur, typiquement sur un écran avec visualisation de la position des cibles détectées. On observera que l'étape 380 est omise dans l'hypothèse où l'étape 360 ne détecte pas de cible.
- étape 390 : fin de l'examen d'un individu.

Dans une forme de réalisation, au cours de l'étape 340, l'unité centrale 50 peut être configurée pour ne modifier la sensibilité d'imagerie micro-ondes que dans la zone de l'image microonde dans laquelle le détecteur de métal 100 a détecté une cible en métal, la sensibilité restant inchangée dans les autres zones de l'image microonde. En d'autres termes, l'unité centrale 50 ne modifie cette sensibilité que dans une partie de l'image microonde qui est obtenue à partir des signaux issus des moyens de détection micro-ondes 10, ladite partie correspondant à la zone dans laquelle le détecteur de métal a opéré une détection d'une cible métallique.

On notera sur les figures 10, la présence de marquages au sol 20, 22, sensiblement au centre de l'espace formant un scanner corporel 10. Ces marquages 20, 22 correspondent de préférence au contour d'empreintes de semelles de chaussures. Ces marquages 20, 22 sont destinés à recevoir les pieds d'un individu au cours de son examen par le scanner corporel 10. Ces marquages 20, 22 permettent de garantir un positionnement précis de l'individu examiné par rapport à un moyen émetteur/récepteur micro-ondes 12 et un moyen récepteur/émetteur micro-ondes 14 placés en regard, respectivement de part et d'autre du couloir ainsi formé dans le scanner corporel 10, dans le prolongement du couloir amont 102 formé par le détecteur de métal 100.

Bien que cela ne soit pas représenté sur les figures annexées, le détecteur de métal 100 peut également être pourvu au sol d'une ligne centrale ou un moyen équivalent délimitant le trajet préférentiel de l'individu lors de son déplacement dans le détecteur de métal 100 afin de garantir un positionnement précis de l'individu par rapport aux panneaux latéraux 110, 120 et par conséquent par rapport aux moyens de détection 140.

Le scanner corporel 10 peut être traversant. Dans ce cas après avoir été examiné dans le scanner corporel 10, l'individu examiné sort du scanner corporel 10 par son extrémité opposée à l'entrée par laquelle il a pénétré dans le détecteur de métal 100.

Le scanner corporel 10 peut également être fermé sur son extrémité opposée à l'entrée dans le détecteur de métal 100. Dans ce cas après avoir été examiné dans le scanner corporel 10, l'individu examiné sort du scanner corporel 10 en repassant par l'entrée du détecteur de métal 100.

Bien entendu la présente invention n'est pas limitée aux modes de réalisation précédemment décrits, mais s'étend à toutes variantes conformes à son esprit.

Comme indiqué précédemment les barrières de détection de passage 130 peuvent être formées de toute autre technologie que la technologie optique.

La détection de l'avancée d'un individu et de son positionnement dans le couloir 102 peut être opérée par exemple à l'aide d'au moins une caméra correctement placée permettant de détecter par analyse de pixels le passage successif d'un individu par une pluralité de barrières fictives correspondant à la localisation des barrières décrites dans la description qui précède.

De même le détecteur de métal 100 placé en amont du scanner corporel 10 conforme à la présente invention peut être équipé d'un système de type Doppler ou équivalent permettant de connaitre la place et le déplacement d'un individu dans le couloir 102.

Le système conforme à l'invention comprend une unité centrale qui analyse d'une part les signaux issus des barrières de détection de passage 130 et d'autre part les signaux issus des transducteurs 140.

L'unité centrale exploite les signaux issus des barrières de détection de passage 130 pour définir la position de l'individu dans le détecteur de métal 100 et par rapport aux transducteurs 140. Connaissant la position de l'individu par rapport aux transducteurs 140, l'unité centrale peut, lorsque les transducteurs 140 détectent un objet métallique, déterminer sur quelle partie du corps ledit objet métallique est placé.

L'on notera que dans le cadre de l'invention, la disposition des transducteurs 141, 142, 143, 144 et la coopération définie entre ceux-ci par le pilotage de leur configuration en mode émetteur ou en mode récepteur, génère des lignes principales de détection entre deux transducteurs respectivement émetteur et récepteur, qui sont pour les unes transversales à la direction de déplacement dans le détecteur de métal 100 et pour les autres inclinées en oblique ou diagonale par rapport à cette direction de déplacement dans le détecteur de métal 100.

Par ailleurs l'on comprendra à la lecture de la description qui précède et à l'examen des figures annexées, que les lignes de détection transversales permettent prioritairement de détecter des objets métalliques portés par un individu sur l'avant et sur l'arrière de son corps dans la mesure où l'avant et l'arrière du corps de l'individu atteint en premier et respectivement quitte en dernier ces lignes, tandis que les lignes de détection obliques permettent prioritairement de détecter des objets métalliques portés par un individu sur son côté gauche ou son côté droit dans la mesure ou les côtés de l'individu franchissent successivement ces lignes.

La combinaison du détecteur de métal 100 et du scanner corporel 10 conforme à l'invention permet notamment de garantir une détection fiable d'objets métalliques sur la totalité du corps d'un individu, y compris au niveau des pieds, grâce à la focalisation de l'analyse par le scanner corporel 10 résultant de la première recherche opérée par le détecteur de métal 100.

L'implantation des transducteurs détecteurs de métal 141, 142, 143 et 144 peut faire l'objet de nombreux modes de réalisation.

Comme indiqué précédemment les détecteurs situés d'un même côté du couloir 102, soit les détecteurs 141 et 144 d'une part et 142 et 143 d'autre part, sont de préférence situés respectivement dans les panneaux latéraux 110, 120. Ils peuvent être placés sur un support commun latéral ou sur des supports respectifs.

En variante les détecteurs 141, 144 et 142, 143 peuvent être placés dans des colonnes respectives.

En pratique l'opérateur peut disposer sur un écran unique de la visualisation du résultat de l'analyse de type inductif visant la recherche d'un objet métallique et de l'imagerie résultant de l'analyse à base de micro-ondes.

## Revendications

1. Système détecteur d'objets métalliques portés par un individu, comprenant un détecteur de métal (100) comprenant :
- deux panneaux (110, 120) définissant un passage,
- au moins trois transducteurs inductifs (141, 142, 143) logés dans les panneaux (110 120) en étant disposés de part et d'autre du passage (102), deux de ces transducteurs (142, 143) étant placés dans un premier desdits panneaux (110) en étant espacés longitudinalement selon une direction de déplacement dans le passage (102) tandis que le troisième transducteur (141) est disposé sur le côté opposé du passage (102) dans un deuxième desdits panneaux (120), de sorte que les au moins trois transducteurs (141, 142, 143) permettent en combinaison une discrimination spatiale de la localisation d'au moins un objet métallique détecté (M1, M2, M3, M4),
le système détecteur étant **caractérisé en ce qu'**il comprend en outre :
- trois barrières de détection de passage (130) configurées pour générer un signal de détection lors d'un passage d'un individu dans le détecteur de métal (100) et réparties longitudinalement le long du passage (102) dans le détecteur de métal (100) et
- une unité centrale (50) configurée pour analyser et exploiter les signaux issus desdites barrières de détection de passage (130) dans le détecteur de métal (100) et des signaux issus des au moins trois transducteurs (140), déterminer la position de l'individu dans le détecteur de métal (100) par rapport aux transducteurs (140) à l'instant où au moins un transducteur (141, 142, 143, 144) génère un signal de détection d'un objet métallique et en déduire une position de l'objet métallique détecté (M1, M2, M3, M4) par rapport au corps de l'individu.

2. Système selon la revendication 1, dans lequel les au moins trois transducteurs (141, 142, 143) sont disposés suivant l'une des configurations suivantes : un émetteur et deux récepteurs, par exemple disposés sous forme d'un émetteur (141) logé dans le premier panneau (110) et deux récepteurs associés (142, 143) logés dans le deuxième panneau (120) ; deux émetteurs et un récepteur, par exemple disposés sous forme de deux émetteurs (142, 143) logés dans le premier panneau (110) et un récepteur (141) logé dans le deuxième panneau (120) ; deux émetteurs et deux récepteurs, par exemple disposés sous forme de deux transducteurs (141, 144) logés dans le premier panneau (110) et deux transducteurs (142, 143) logés dans le deuxième panneau (120) ; chacun des transducteurs (141, 142, 143, 144) est adapté pour fonctionner alternativement en émetteur et/ou récepteur ; chacun des transducteurs détecteurs de métal (141, 142, 143, 144) est adapté pour fonctionner alternativement en émetteur et/ou récepteur.

3. Système selon l'une des revendications 1 ou 2, dans lequel l'unité centrale (50) est configurée pour discriminer la position d'un objet détecté en métal (M1, M2, M3) d'une part dans le sens de la largeur du passage (102), transversalement à la direction de déplacement, typiquement sur la gauche ou sur la droite d'un individu, et dans le sens de la profondeur, parallèlement à la direction de déplacement, typiquement sur l'avant ou sur l'arrière d'un individu.

4. Système selon l'une des revendications 1 à 3, dans lequel chaque transducteur (141, 142, 143, 144) est formé d'au moins un bobinage.

5. Système selon l'une des revendications 1 à 4, dans lequel les barrières de détection de passage (130) comprennent des barrières optiques.

6. Système selon l'une des revendications 1 à 5, dans lequel les barrières de détection de passage (131, 132, 133) comprennent des détecteurs placés dans les panneaux latéraux (110, 120) qui encadrent le passage (102).

7. Système selon l'une des revendications 1 à 6, dans lequel au moins une des barrières de détection de passage (130) coïncide en position longitudinale avec une paire de transducteurs (140) et/ou avec un centre d'une ligne de détection oblique reliant respectivement deux transducteurs (141, 143).

8. Système selon l'une des revendications 1 à 7, dans lequel les transducteurs (141, 142, 143, 144) coopèrent par groupe de trois, dans lequel, au sein de chaque groupe de trois transducteurs, un transducteur opère en émetteur ou récepteur et les deux autres transducteurs remplissent la fonction complémentaire récepteur ou émetteur.

9. Système selon l'une des revendications 1 à 8, dans lequel un couple de transducteurs (141, 142) est placés en regard, de part et d'autre du passage (102), respectivement dans les panneaux latéraux (110, 120), au même niveau longitudinal dans le sens du passage dans le passage (102), le troisième transducteur (143) étant décalé vers l'aval, en référence au sens de passage dans le passage (102) par rapport au couple de transducteurs précité (141, 142), au moins une des barrières de détection de passage (132) étant située au même niveau longitudinal qu'un couple de transducteurs (141, 142).

10. Système selon l'une des revendications 1 à 9, comprenant quatre transducteurs (141, 142, 143, 144) associés à des barrières de détection de passage (131, 132, 133) successives le long du trajet de déplacement dans le détecteur de métal (100), une barrière de détection de passage (132) étant située au niveau d'une paire de transducteurs (141, 142) et une autre barrière de détection de passage étant située au niveau d'un point de croisement entre deux lignes de détection obliques reliant respectivement des paires de transducteurs (140) détecteur de métal.

11. Système selon l'une des revendications 1 à 10, dans lequel les au moins trois transducteurs positionnés de sorte à définir deux lignes privilégiées de détection entre chaque paire de transducteurs disposés sur les côtés opposés du passage, présentant un angle compris entre 15 et 60°, de préférence entre 30 et 45°.

12. Système selon l'une des revendications 1 à 11, comprenant en outre un scanner corporel (10) comprenant des moyens de détection par imagerie microondes (10) configurés pour générer une image microonde, le détecteur de métal (100) étant positionné en amont du scanner corporel (10) par rapport à la direction de déplacement et l'unité centrale (50) étant configurée pour adapter une sensibilité des moyens de détection par imagerie micro-ondes (10), en cas d'identification d'une présence potentielle d'au moins un objet métallique par le détecteur de métal (100) et de détermination de la position de l'objet métallique détecté (M1, M2, M3, M4) par rapport au corps de l'individu, de sorte que ladite sensibilité soit plus importante dans une ou des zones d'intérêt correspondant à la position de l'au moins un objet métallique que dans le reste de l'image microonde.

13. Procédé de détection d'objets métalliques (M1, M2, M3) portés par un individu, comprenant les étapes suivantes :
- S1 : détection (204, 220, 228) d'au moins un objet métallique (M1, M2, M3) porté par un individu passant dans un système selon l'une des revendications 1 à 12 et génération d'un signal de détection de métal,
le procédé de détection étant **caractérisé en ce qu'**il comprend en outre les étapes suivantes :
- S2 : détection d'un passage d'un individu dans le détecteur de métal (100) et génération d'un signal de détection de passage,
- S3 : analyse et exploitation des signaux de détection de passage et des signaux de détection de métal,
- S4 : détermination de la position de l'individu dans le détecteur de métal (100) par rapport aux transducteurs (140) et aux signaux desdites barrières de détection de passage (130) du détecteur de métal à l'instant où le signal de détection de métal est généré,
- S5 : déduction (208, 212, 216, 222, 226, 230, 234) d'une position de l'objet métallique détecté (M1, M2, M3, M4) par rapport au corps de l'individu.

14. Procédé selon la revendication 13, comprenant en outre les étapes suivants :
- S6 : détection par un scanner corporel de sorte à générer une image microondes et
- S7 : suite à l'étape S5, adaptation d'une sensibilité de détection du scanner corporel de sorte que ladite sensibilité soit plus importante dans une ou des zones d'intérêt correspondant à la position de l'objet métallique que dans le reste de l'image microonde.

## Patentansprüche

1. System zum Aufspüren von Metallgegenständen, die von einer Person getragen werden, mit einem Metalldetektor (100) mit:
- zwei Wänden (110, 120), die einen Durchgang definieren,
- mindestens drei induktive Umsetzer (141, 142, 143), die in der Wänden (110, 120) untergebracht sind, indem sie auf beiden Seiten des Durchgangs (102) angeordnet sind, wobei zwei dieser Umsetzer (142, 143) in einer ersten der Wand (110) angeordnet sind, indem sie in Längsrichtung entlang einer Bewegungsrichtung in dem Durchgang (102) beabstandet sind, während der dritte Umsetzer (141) auf der gegenüberliegenden Seite des Durchgangs (102) in einer zweiten der Platten (120) angeordnet ist, so dass die mindestens drei Umsetzer (141, 142, 143) in Kombination eine räumliche Diskriminierung des Ortes von mindestens einem erfassten Metallobjekt (M1, M2, M3, M4) ermöglichen,
wobei das Detektorsystem **dadurch gekennzeichnet ist, dass** es außerdem umfasst:
- drei Durchgangsdetektionsbarrieren (130), die so konfiguriert sind, dass sie bei einem Durchgang einer Person durch den Metalldetektor (100) ein Detektionssignal erzeugen, und die in Längsrichtung entlang des Durchgangs (102) durch den Metalldetektor (100) verteilt sind, und
- eine Zentraleinheit (50), die so konfiguriert ist, dass sie die Signale von den Durchgangsdetektionsschranken (130) in dem Metalldetektor (100) und die Signale von den mindestens drei Umsetzern (140) analysiert und auswertet, die Position der Person im Metalldetektor (100) relativ zu den Umsetzern (140) in dem Moment zu bestimmen, in dem mindestens ein Umsetzer (141, 142, 143, 144) ein Signal zur Erfassung eines Metallobjekts erzeugt, und daraus eine Position des erfassten Metallobjekts (M1, M2, M3, M4) relativ zum Körper der Person abzuleiten.

2. System nach Anspruch 1, bei dem die mindestens drei Umsetzer (141, 142, 143) in einer der folgenden Konfigurationen angeordnet sind: ein Sender und zwei Empfänger, beispielsweise angeordnet als ein Sender (141), der in der ersten Wand (110) untergebracht ist, und zwei zugehörige Sender (142, 143), die in der zweiten Wand (120) untergebracht sind; zwei Sender und ein Empfänger, beispielsweise angeordnet als zwei Sender (142, 143), die in der ersten Wand (110) untergebracht sind, und ein Sender (141), der in der zweiten Wand (120) untergebracht ist; zwei Sender und zwei Empfänger, beispielsweise angeordnet als zwei Umsetzer (141, 144), die in der ersten Wand (110) untergebracht sind, und zwei Umsetzer (142, 143), die in der zweiten Tafel (120) untergebracht sind; jeder der Umsetzer (141, 142, 143, 144) ist so ausgelegt, dass er abwechselnd als Sender und/oder Empfänger arbeitet; jeder der Metalldetektor-Umsetzer (141, 142, 143, 144) ist so ausgelegt, dass er abwechselnd als Sender und/oder Empfänger arbeitet.

3. System nach einem der Ansprüche 1 oder 2, wobei die Zentraleinheit (50) so konfiguriert ist, dass sie die Position eines erfassten Metallobjekts (M1, M2, M3) einerseits in der Breitenrichtung des Durchgangs (102) quer zur Bewegungsrichtung, typischerweise auf der linken oder rechten Seite einer Person, und andererseits in der Tiefenrichtung parallel zur Bewegungsrichtung, typischerweise auf der Vorder- oder Rückseite einer Person, unterscheidet.

4. System nach einem der Ansprüche 1 bis 3, wobei jeder Umsetzer (141, 142, 143, 144) aus mindestens einer Wicklung gebildet ist.

5. System nach einem der Ansprüche 1 bis 4, wobei die Durchgangserfassungsschranken (130) Lichtschranken umfassen.

6. System nach einem der Ansprüche 1 bis 5, wobei die Durchgangserfassungsschranken (131, 132, 133) Detektoren umfassen, die in den Seitenwänden (110, 120) angeordnet sind, die den Durchgang (102) einrahmen.

7. System nach einem der Ansprüche 1 bis 6, wobei mindestens eine der Durchgangserfassungsschranken (130) in Längsrichtung mit einem Paar von Umsetzern (140) und/oder mit einem Mittelpunkt einer schrägen Erfassungslinie, die jeweils zwei Umsetzer (141, 143) verbindet, zusammenfällt.

8. System nach einem der Ansprüche 1 bis 7, wobei die Umsetzer (141, 142, 143, 144) in Dreiergruppen zusammenarbeiten, wobei innerhalb jeder Dreiergruppe von Umsetzern ein Umsetzer als Sender oder Empfänger fungiert und die beiden anderen Umsetzer die ergänzende Funktion als Empfänger oder Sender erfüllen.

9. System nach einem der Ansprüche 1 bis 8, wobei ein Paar von Umsetzern (141, 142) zu beiden Seiten des Durchgangs (102) jeweils in den Seitenwänden (110, 120) auf demselben Längsniveau in Richtung des Durchgangs durch den Durchgang (102) gegenüberliegend angeordnet ist, wobei der dritte Umsetzer (143) in Bezug auf die Richtung des Durchgangs durch den Durchgang (102) von dem vorgenannten Umsetzerpaar (141, 142) stromabwärts versetzt ist, wobei mindestens eine der Durchgangserfassungsschranken (132) auf demselben Längsniveau wie ein Paar von Umsetzern (141, 142) angeordnet ist.

10. System nach einem der Ansprüche 1 bis 9 mit vier Umsetzern (141, 142, 143, 144), die mit aufeinanderfolgenden Durchgangsdetektionsbarrieren (131, 132, 133) entlang des Bewegungswegs im Metalldetektor (100) verbunden sind, wobei eine Durchgangsdetektionsbarriere (132) an einem Paar von Umsetzern (141, 142) und eine weitere Durchgangsdetektionsbarriere an einem Kreuzungspunkt zwischen zwei schrägen Detektionslinien angeordnet ist, die jeweils Paare von Metalldetektor-Umsetzern (140) verbinden.

11. System nach einem der Ansprüche 1 bis 10, wobei die mindestens drei Umsetzer, die so positioniert sind, dass sie zwei bevorzugte Erfassungslinien zwischen jedem Paar von Umsetzern, die auf gegenüberliegenden Seiten des Durchgangs angeordnet sind, definieren, einen Winkel zwischen 15 und 60°, vorzugsweise zwischen 30 und 45°, aufweisen.

12. System nach einem der Ansprüche 1 bis 11, ferner umfassend einen Körperscanner (10) mit einer Mikrowellen-Bilderfassungseinrichtung (10), die so konfiguriert ist, dass sie ein Mikrowellenbild erzeugt, wobei der Metalldetektor (100) in Bezug auf die Bewegungsrichtung vor dem Körperscanner (10) positioniert ist und die Zentraleinheit (50) so konfiguriert ist, dass sie eine Empfindlichkeit der Mikrowellen-Bilderfassungseinrichtung (10) anpasst, im Fall der Identifizierung einer potenziellen Anwesenheit mindestens eines Metallobjekts durch den Metalldetektor (100) und der Bestimmung der Position des erfassten Metallobjekts (M1, M2, M3, M4) in Bezug auf den Körper der Person, so dass die Empfindlichkeit in einem oder mehreren Bereichen von Interesse, die der Position des mindestens einen Metallobjekts entsprechen, größer ist als im Rest des Mikrowellenbildes.

13. Verfahren zum Erkennen von Metallgegenständen (M1, M2, M3), die von einer Person getragen werden, mit den folgenden Schritten:
- S1: Erfassen (204, 220, 228) mindestens eines Metallobjekts (M1, M2, M3), das von einer Person getragen wird, die ein System nach einem der Ansprüche 1 bis 12 durchläuft, und Erzeugen eines Metallerfassungssignals,
wobei das Erfassungsverfahren **dadurch gekennzeichnet ist, dass** es außerdem die folgenden Schritte umfasst:
- S2: Erkennen des Durchgangs einer Person durch den Metalldetektor (100) und Erzeugen eines Durchgangserkennungssignals,
- S3: Analyse und Auswertung von Signalen zur Erkennung von Durchgängen und Signalen zur Erkennung von Metallen,
- S4: Bestimmen der Position der Person im Metalldetektor (100) in Bezug auf die Umsetzer (140) und die Signale der Durchgangsdetektionsschranken (130) des Metalldetektors zu dem Zeitpunkt, zu dem das Metalldetektionssignal erzeugt wird,
- S5: Ableiten (208, 212, 216, 222, 226, 230, 234) einer Position des erfassten Metallobjekts (M1, M2, M3, M4) relativ zum Körper der Person.

14. Verfahren nach Anspruch 13, das außerdem die folgenden Schritte umfasst:
- S6: Erfassung durch einen Körperscanner, so dass ein Mikrowellenbild erzeugt wird, und
- S7: im Anschluss an Schritt S5, Anpassen einer Erfassungsempfindlichkeit des Körperscanners, so dass die Empfindlichkeit in einem oder mehreren interessierenden Bereichen, die der Position des Metallobjekts entsprechen, größer ist als im Rest des Mikrowellenbildes.

## Claims

1. A system for detecting metal objects carried by an individual, comprising a metal detector (100) comprising:
- two panels (110, 120) defining a passageway,
- at least three inductive transducers (141, 142, 143) housed in the panels (110, 120) and arranged on either side of the passage (102), two of these transducers (142, 143) being placed in a first of the panels (110) spaced apart longitudinally in a direction of movement in the passage (102), while the third transducer (141) is arranged on the opposite side of the passage (102) in a second of the panels (120), so that the at least three transducers (141, 142, 143) in combination allow spatial discrimination of the location of at least one detected metal object (M1, M2, M3, M4),
the detector system being **characterised in that** it further comprises :
- three passage detection barriers (130) configured to generate a detection signal when an individual passes through the metal detector (100) and distributed longitudinally along the passage (102) through the metal detector (100) and
- a central unit (50) configured to analyse and use the signals from said passage detection barriers (130) in the metal detector (100) and the signals from the at least three transducers (140), determining the position of the individual in the metal detector (100) relative to the transducers (140) at the time when at least one transducer (141, 142, 143, 144) generates a metal object detection signal and deducing therefrom a position of the detected metal object (M1, M2, M3, M4) relative to the individual's body.

2. A system according to claim 1, wherein the at least three transducers (141, 142, 143) are arranged in one of the following configurations: one transmitter and two receivers, for example arranged as one transmitter (141) housed in the first panel (110) and two associated receivers (142, 143) housed in the second panel (120); two transmitters and one receiver, for example arranged as two transmitters (142, 143) housed in the first panel (110) and one receiver (141) housed in the second panel (120); two transmitters and two receivers, for example arranged in the form of two transducers (141, 144) housed in the first panel (110) and two transducers (142, 143) housed in the second panel (120); each of the transducers (141, 142, 143, 144) is adapted to operate alternately as a transmitter and/or receiver; each of the metal-detecting transducers (141, 142, 143, 144) is adapted to operate alternately as a transmitter and/or receiver.

3. A system according to one of claims 1 or 2, wherein the central unit (50) is configured to discriminate the position of a detected metal object (M1, M2, M3) on the one hand in the direction of the width of the passage (102), transversely to the direction of movement, typically to the left or to the right of an individual, and in the direction of the depth, parallel to the direction of movement, typically to the front or to the rear of an individual.

4. A system according to any one of claims 1 to 3, wherein each transducer (141, 142, 143, 144) is formed of at least one winding.

5. A system according to any one of claims 1 to 4, wherein the passage detection barriers (130) comprise light barriers.

6. System according to one of claims 1 to 5, wherein the passage detection barriers (131, 132, 133) comprise detectors placed in the side panels (110, 120) which frame the passage (102).

7. A system according to one of claims 1 to 6, wherein at least one of the passage detection barriers (130) coincides in longitudinal position with a pair of transducers (140) and/or with a centre of an oblique detection line connecting two transducers (141, 143) respectively.

8. A system according to one of claims 1 to 7, wherein the transducers (141, 142, 143, 144) cooperate in groups of three, wherein, within each group of three transducers, one transducer operates as a transmitter or receiver and the other two transducers perform the complementary function of receiver or transmitter.

9. A system according to one of claims 1 to 8, wherein a pair of transducers (141, 142) is placed opposite each other, on either side of the passage (102), respectively in the side panels (110, 120), at the same longitudinal level in the direction of movement in the passage (102), the third transducer (143) being offset downstream, with reference to the direction of passage through the passage (102), with respect to the aforementioned pair of transducers (141, 142), at least one of the passage detection barriers (132) being located at the same longitudinal level as a pair of transducers (141, 142).

10. A system according to any one of claims 1 to 9, comprising four transducers (141, 142, 143, 144) associated with successive passage detection barriers (131, 132, 133) along the direction of movement in the metal detector (100), one passage detection barrier (132) being located at a pair of transducers (141, 142) and another passage detection barrier being located at a point of intersection between two oblique detection lines respectively connecting pairs of metal detector transducers (140).

11. A system according to one of claims 1 to 10, wherein the at least three transducers positioned so as to define two privileged lines of detection between each pair of transducers disposed on opposite sides of the passageway, presenting an angle of between 15 and 60°, preferably between 30 and 45°.

12. A system according to one of claims 1 to 11, further comprising a body scanner (10) comprising microwave imaging detection means (10) configured to generate a microwave image, the metal detector (100) being positioned upstream of the body scanner (10) with respect to the direction of movement and the central unit (50) being configured to adapt a sensitivity of the microwave imaging detection means (10), in the event of identification of a potential presence of at least one metal object by the metal detector (100) and determination of the position of the detected metal object (M1, M2, M3, M4) relative to the body of the individual, so that the sensitivity is greater in one or more zones of interest corresponding to the position of the at least one metal object than in the rest of the microwave image.

13. A method of detecting metal objects (M1, M2, M3) carried by an individual, comprising the following steps:
- S1: detection (204, 220, 228) of at least one metal object (M1, M2, M3) carried by an individual passing through a system according to one of claims 1 to 12 and generation of a metal detection signal,
the detection method being **characterised in that** it further comprises the following steps:
- S2: detection of the passage of an individual through the metal detector (100) and generation of a passage detection signal,
- S3: analysis and use of passage detection signals and metal detection signals,
- S4: determination of the position of the individual in the metal detector (100) relative to the transducers (140) and to the signals from said passage detection barriers (130) of the metal detector at the time when the metal detection signal is generated,
- S5: deduction (208, 212, 216, 222, 226, 230, 234) of a position of the detected metal object (M1, M2, M3, M4) relative to the individual's body.

14. A method according to claim 13, further comprising the following steps:
- S6: detection by a body scanner so as to generate a microwave image and
- S7: following step S5, adaptation of a detection sensitivity of the body scanner so that said sensitivity is greater in one or more zones of interest corresponding to the position of the metal object than in the rest of the microwave image.
